# EUROPEAN PATENT SPECIFICATION

(11) **EP 2 641 866 B1**
(45) Date of publication and mention of the grant of the patent: **31.12.2014**
(21) Application number: 11815447.5
(22) Date of filing: 17.11.2011
(51) Int. Cl.: C01B 3/32, C01B 3/48, C01B 3/58, B01J 19/00, H01M 8/06

(54) **ETHANOL PROCESSING SYSTEM INTEGRATED IN AIR-INDEPENDENT PROPULSION SYSTEMS**
IN LUFTUNABHÄNGIGE ANTRIEBSSYSTEME INTEGRIERTES ETHANOLVERARBEITUNGSSYSTEM
SYSTÈME DE TRAITEMENT D'ÉTHANOL INTÉGRÉ À DES SYSTÈMES DE PROPULSION ANAÉROBIE

(30) Priority: 18.11.2010 EP 10382304
(43) Date of publication of application: 25.09.2013
(73) Proprietor: Técnicas Reunidas, S.A., 28015 Madrid (ES)
(72) Inventor: CAUBILLA ANGULO, Juan Manuel, E - 28015 Madrid (ES); GONZÁLEZ BAÑUELOS, Rosa María, E - 28015 Madrid (ES)
(74) Representative: ABG Patentes, S.L.
(86) International application number: PCT/ES2011/070790
(87) International publication number: WO 2012/066174

(56) References cited:
- EP-A1- 1 808 327
- WO-A2-2009/130197
- FR-A1- 2 795 339
- US-A- 6 063 515
- US-A1- 2004 043 263
- US-A1- 2006 057 058
- US-A1- 2006 156 627
- US-A1- 2007 122 667
- US-A1- 2010 028 737
- ROSTRUP-NIELSEN J R: "CONVERSION OF HYDROCARBONS AND ALCOHOLS FOR FUEL CELLS", PHYSICAL CHEMISTRY CHEMICAL PHYSICS, ROYAL SOCIETY OF CHEMISTRY, CAMBRIDGE, GB, vol. 3, no. 3, 1 February 2001 (2001-02-01), pages 283-288, XP001036344, ISSN: 1463-9076, DOI: DOI:10.1039/B004660O
- JOENSEN F ET AL: "Conversion of hydrocarbons and alcohols for fuel cells", JOURNAL OF POWER SOURCES, ELSEVIER SA, CH, vol. 105, no. 2, 20 March 2002 (2002-03-20), pages 93-99, XP004344340, ISSN: 0378-7753, DOI: DOI:10.1016/S0378-7753(01)00939-9
- HOTZA D ET AL: "Fuel cells development and hydrogen production from renewable resources in Brazil", INTERNATIONAL JOURNAL OF HYDROGEN ENERGY, ELSEVIER SCIENCE PUBLISHERS B.V., BARKING, GB, vol. 33, no. 19, 1 October 2008 (2008-10-01), pages 4915-4935, XP025466434, ISSN: 0360-3199, DOI: DOI:10.1016/J.IJHYDENE.2008.06.028 [retrieved on 2008-09-07]

## Description

### Field of the Invention

The present invention is comprised within the devices which produce a hydrogen-rich stream intended to feed an air-independent propulsion system (commonly known as AIP systems) of conventional submarines wherein said AIP system is based on fuel cells of the proton exchange membrane type.

### Background

In conventional non-nuclear submarines the electric energy needed to be supplied for the propulsion and the auxiliary equipment on board is stored in batteries which are recharged through rectifier alternator diesel groups (diesel groups). The latter need atmospheric air to operate which involves a significant operation restriction in terms of availability when submerged and both visual and acoustic discretion while charging the batteries by means of the diesel groups.

To solve this problem, historically two ways independent from one another have been taken:
1. replacing the diesel groups with a nuclear reactor, converting the conventional submarine into a nuclear submarine, providing it with an almost unlimited capacity to stay submerged, attending only to energy generating criteria on board.
2. combining the diesel groups with other air-independent electric energy generating systems, called AIP systems, which increase the autonomy when submerged and the discretion of the submarine during its necessary operation. Submarines integrating these systems are called AIP submarines.

The AIP systems for conventional submarines therefore generate in an air-independent manner, the electric current needed on board for propulsion and for the auxiliary equpiment. This involves the installation of a storage system for storing oxidizing agent which replaces the air on board of the submarines. In the current state of the art, all AIP systems use a liquid oxygen-based storage system. The oxygen consumption of the AIP system and its storage tank are therefore one of the main dimensional factors for integrating an AIP system in a submarine and therefore for the autonomy of the submarine when submerged.

AIP systems can be classified into two large groups:
1. AIP systems the electric current generation of which is performed by means of devices other than fuel cells
2. AIP systems based on using fuel cells as electric current generator.

In the current state of the art and within the AIP systems of submarines based on using fuel cells as electric current generators, only systems where the hydrogen needed for the fuel cell is stored on board the submarine by means of metal hydrides, i.e., the hydrogen is not generated on board, are in operation. This restriction is caused by the nature of the fuel cell systems currently in use which requires a high hydrogen purity (greater than 99.99 %) for operation. Furthermore, the fuel cell systems currently in use have a closed anode and cathode configuration making their direct integration with fuel processing catalytic systems difficult.

In fact, fuel processors such as ethanol processors for example have not been used up until now to generate the hydrogen required by AIP system, based on fuel cells, integrated in a submarine.

In many AIP systems, a water vapor and carbon dioxide-rich stream is generated as a byproduct which must be released from the submarine in conditions compatibles with its acoustic and visual discretion, through CO₂ removal systems (SECO₂ Systems). The existing method for releasing this stream are based on its efficient dissolution in seawater, whereby a supply stream for supplying to the SECO₂ system with very little concentrations of oxygen and unburned substances present in the exhaust streams of the fuel reforming systems, such as methane, hydrogen from anodic waste, etc, is required.

In addition, the amount of oxygen which can be used in an AIP system is a limiting factor. The use of fuel reforming as a hydrogen producing source to feed the fuel cell requires efficient processes which minimize the consumption thereof and therefore increase the autonomy of the submarine when submerged or reduce the oxygen tank volume. Therefore, the combustion processes to be used in fuel processing must be thermally efficient in oxygen consumption, in addition to producing a very controlled stream of oxygen-free waste gases and other wastes in all operation conditions.

Additionally, in fuel reforming, in addition to hydrogen, other gases such as methane, carbon dioxide and carbon monoxide are produced and small amounts of intermediate compounds from the reforming reaction such as acetaldehyde or impurities present in the fuel may appear. Due to the recent conception of proton exchange membrane fuel cells, carbon monoxide becomes detrimental for the electrodes of the fuel cell therefore reducing its presence to the tolerable levels of the order of 10-50 parts per million (ppm) is necessary. A refining process for refining the reforming gas prior to its integration with fuel cells is therefore required.

There are therefore many factors which must be taken into account when integrating a fuel processing system in the fuel cell-based AIP systems of submarines, therefore designing a fuel processing system having all the features required for effective hydrogen production which allows an optimum feeding and operation of the AIP system, in addition to allowing its placement inside a submarine with the space or dimensional requirements that it entails is not obvious.

### Brief Description of the Invention

The authors of the present invention have developed an ethanol processing system configured in compact subunits or cartridges, which allows maximally reducing the total volume of the system, further providing levels of security, accessibility and maintainability compatible with its integration on board of conventional submarines.

Thus, the cartridge configuration allows confining the reactors and the rest of the main devices in a joint block, which enable minimizing any possible generation of chemical and/or thermal leakages, and prevents the layout of a complex network of pipes complicating the assembly/disassembly and maintenance operations.

This configuration further allows minimizing the number of flanges and/or connections between cartridges and pieces of equipment. The cartridge system can be further understood as a double envelopment or enclosure representing an additional protection against any collision and/or vibration.

Due to these features, the compact and secure configuration in the form of independently detachable cartridges is particularly suitable for integrating the ethanol processing system of the invention in transport means with a limited spatial requirement such as the case of a submarine.

In addition to the design of this processing system in the form of compact cartridges, the combination of different subunits which make up said system and which are described below has allowed combining a series of key requirements for the correct operation of the system and an efficient hydrogen production, such as: use of pure oxygen instead of air; maximizing hydrogen production; stability of hydrogen production in steady state; minimizing oxygen and ethanol consumption; minimizing contaminants in process gas stream to the fuel cell system; integration with the fuel cell system at constant intensity; integration in open anode and cathode with the fuel cell system; minimizing wastes for integration with the SECO₂ system both at steady state and in transitory state (starting and stopping); thermal efficiency which affects the minimization of consumptions related to the needs of cooling and ventilating the system; energy efficiency which affects the minimization of parasite electric energy consumptions; and managing leakages throughout the operation states and inerting in the transitory states.

Thus, in a first aspect the invention relates to an ethanol processing system integrated in a fuel cell-based air-independent propulsion system wherein said ethanol processing system comprises:
a) a reforming subunit comprising a reformer comprising:
   a.1) an adiabatic pre-reforming microreactor or pre-reformer in which the ethanol is catalytically converted into methane, hydrogen, carbon monoxide and carbon dioxide;
   a.2.) at least one reforming microreactor isothermal or reformer in which the methane contained in the pre-reformed gas stream obtained in the pre-reforming microreactor is catalytically converted into hydrogen;
   a.3.) at least one catalytic combustion adiabatic microreactor providing the thermal energy required by the reformer;
b) a purification subunit comprising:
   b.1) at least one adiabatic microreactor or WGS microreactor wherein a gas-water shift reaction is carried out in the presence of a catalyst;
   b.2) an adiabatic microreactor or COPROx microreactor wherein a preferential oxidation reaction is carried out in the presence of a catalyst; and optionally
   b.3) an adiabatic methanation microreactor wherein the selective methanation of carbon monoxide is carried out in the presence of a catalyst;
c) a post-combustion subunit comprising an adiabatic microreactor wherein the catalytic combustion of the fumes from the reforming is carried out;
d) a starting subunit comprising at least one catalytic combustion adiabatic microreactor wherein ethanol combustion is carried out with oxygen for providing the thermal energy required by the reforming microreactor; and
e) a heat recovery subunit;
wherein each of the subunits a), b), c) and d) is configured in the form of a compact cartridge;
and wherein the heat recovery subunit comprises an assembly of microexchangers distributed in the subunits a), b) and c).

In an additional aspect, the invention relates to an ethanol reforming method comprising:
- a pre-reforming stage in which the ethanol is catalytically converted into methane, hydrogen, carbon monoxide and carbon dioxide;
- a subsequent reforming stage in which the methane contained in the pre-reformed gas stream obtained in the pre-reforming stage is catalytically converted into hydrogen; and
- a refining stage wherein the hydrogen obtained in the reforming stage is purified for reducing the carbon monoxide content to levels acceptable by the anode of a fuel cell,
wherein said stages are carried out using an ethanol reforming system as has been defined above.

In another aspect, the invention relates to an energy generating system comprising an ethanol processing system integrated in a fuel cell-based air-independent propulsion system as has been defined above.

Additionally, the invention relates to a motor vehicle propelled by an energy generating system wherein said energy generating system comprises an ethanol processing system integrated in a fuel cell-based air-independent propulsion system as has been defined above.

### Brief Description of the Drawings

Figure 1 shows the configuration of adiabatic microreactor
Figure 2 shows the configuration (left) and detail of microchannels (right) of the isothermal pre-reforming microreactor + reforming microreactor + combustion microreactor.
Figure 3 shows the configuration of the reforming cartridge.
Figure 4 shows the configuration of the WGS, COPROx/methanation, postcombustion and starter cartridge.
Figure 5 shows the configuration of type A high temperature microexchanger.
Figure 6 shows the configuration of type B low temperature microexchanger.
Figure 7 shows the configuration of type C micromixer/microexchanger.
Figure 8 shows the basic integration diagram of the stages of the reforming process.
Figure 9 shows the water and bioethanol feeding diagram.
Figure 10 shows the diagram of the reforming process, postcombustion and bioethanol and water feeding system.
Figure 11 shows the diagram of the refining process.

### Detailed Description of the Invention

The ethanol processing system object of the present invention is designed for its integration in a fuel cell-based air-independent propulsion system. Said system is particularly suitable to be located in a vehicle with a limited spatial requirement, preferably a submarine.

The ethanol processing system comprises five subunits: a) a reforming subunit, b) a refining subunit, c) a post-combustion subunit, d) a starting subunit and e) a heat recovery subunit. Each of the subunits a), b), c) and d) is configured in the form of compact and independent cartridges.

The arrangement in the form of cartridges allows maximally reducing the total volume of the system, thus achieving a more compact, safe assembly which can be integrated in, for example, a submarine.

The cartridge configuration further allows confining the different reactors present in the system and the rest of the main devices in a joint block, which enable minimizing any possible generation of chemical and/or thermal leakages, and prevents the layout of a complex network of pipes complicating the assembly/disassembly and maintenance operations.

This configuration further allows minimizing the number of flanges and/or connections between cartridges and devices. The cartridge system can be further understood as a double envelopment or enclosure representing an additional protection against any collision and/or vibration.

Due to these features, the compact and secure configuration in the form of independently detachable cartridges is particularly suitable for integrating the ethanol processing system of the invention in transport means with a limited spatial requirement such as in a submarine.

An additional feature of the system of the invention is that the different catalytic reactors comprised in the subunits of the processing system of the invention are microreactors. The term "micro-reactor" must be understood as a metal structure, preferably manufactured with an iron and chromium alloy (such as Fecralloy® for example) and stainless steel, longitudinally traversed by micrometric channels, wherein the walls of said channels are coated or impregnated with catalyst. The arrangement of channels enables the crossing of different streams or simultaneity of independent reaction mechanisms.

All the catalysts deposited on the microreactors forming the ethanol processing system object of the present invention are active and stable for the mechanisms of the reactions taking place. Noble metals, preferably of the platinum family supported on an inorganic oxide such as alumina or similar acting as an anchor for the catalyst are used as catalysts. These catalysts are formulated in the form of generally aqueous suspension to enable depositing them homogenously on a metal substrate, the surface of which has been modified to improve the final adhesion of the catalyst.

The catalyst is deposited on the walls of microchannels of the microreactor by immersing the microreactor in a suspension containing the catalyst, a process which is commonly referred to as washcoating. Once the suspension is adjusted, the main characteristics of the catalyst such as adhered load, homogeneity and adhesion are optimized.

### Reforming subunit

The reforming subunit comprises an adiabatic pre-reforming microreactor (hereinafter pre-reformer) and, at least one isothermal reforming microreactor (hereinafter reformer).

The design of this subunit favors the cracking of ethanol since it incorporates a pre-reformer causing the rupture of ethanol into methane (which is easier to reform), and prevents the formation of coke deposits on the catalytic support which would cause its deactivation in a short period of time.

Catalytic transformation of ethanol into methane (CH₄), hydrogen (H₂), carbon monoxide (CO) and carbon dioxide (CO₂) take place in the pre-reforming microreactor according to the following reactions:

CH₃CH₂OH → CH₄ + CO + H₂

CH₃CH₂OH + 3H₂O → 6H₂ + 2CO₂

CO + H₂O → CO₂ + H₂

CO + 3H₂ → CH₄ + 2H₂O

The outlet stream of the pre-reformer is then fed to the reformer wherein the transformation of the methane generated in the pre-reformer into hydrogen takes place by means of a catalytic reforming reaction with the water vapor present in the process stream itself. The reactions occurring in this stage are the following:

CH₄ + H₂O → CO + 3H₂

CO + H₂O → CO₂ + H₂

In a particular embodiment, the reforming subunit comprises two reforming microreactors installed in parallel such that the process gas from the pre-reformer is identically distributed between both microreactors.

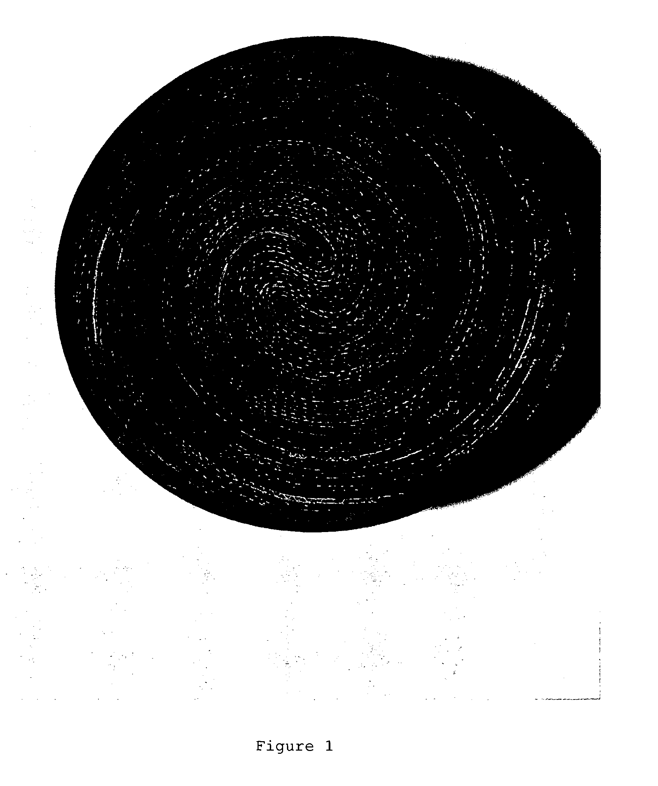

Preferably, the adiabatic pre-reforming microreactor is a metal monolith of microchannels preferably manufactured with a chromium and iron alloy (for example Fecralloy®) and (austenitic and/or martensitic) stainless steel given that these materials offer the best compromise of properties: heat transfer, use temperature and price. Its configuration is shown in Figure 1. To prepare the monoliths, flat and wavy metal sheets are alternately arranged, and rolled by corrugation or prepared by means of extrusion.

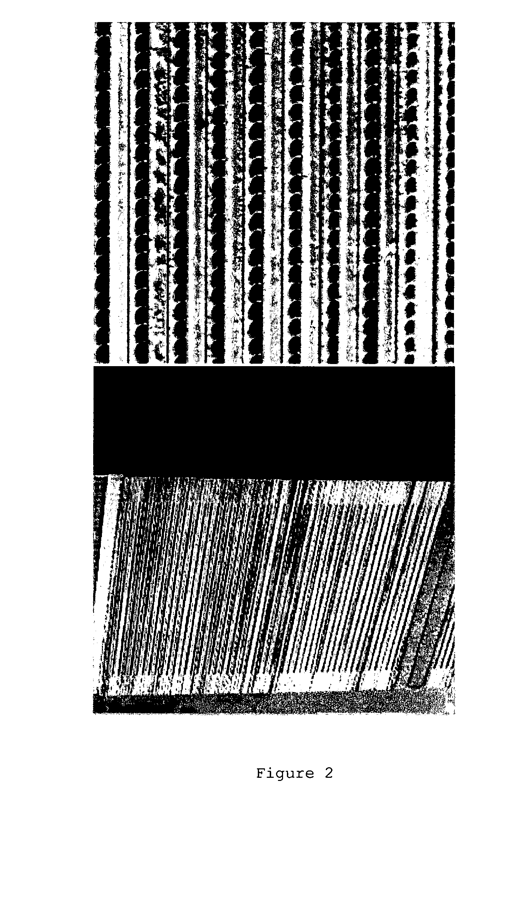

The isothermal reforming microreactor is also preferably manufactured with an iron, aluminium and chromium alloy (for example Fecralloy®) and stainless steel. Said microreactor is traversed by micrometric channels with dual arrangement of microchannels in cross-flow which enable crossing different streams or simultaneity of independent reaction mechanisms. Its configuration is shown in Figure 2.

The catalysts used for carrying out the pre-reforming and reforming reactions are deposited on the walls of the microchannels traversing the microreactors. Said catalysts are active and stable for the mechanism of the reactions taking place.

In a particular embodiment, noble metals of the platinum family supported on an inorganic oxide such as alumina or the like acting as an anchor for the catalyst are used as catalysts. These catalysts are formulated in the form of generally aqueous suspension to enable depositing them homogenously on a metal substrate, the surface of which has been modified to improve the final adhesion of the catalyst.

Said catalysts allow carrying out the pre-reforming and reforming reactions completely converting the ethanol without the significant formation of secondary compounds and/or coke at 425°C (optimal temperature). Likewise, said catalysts allow obtaining at 700°C conversions greater than 95% for the methane in the combustion reaction.

Preferably, the catalyst used in the pre-reforming microreactor and in the reforming microreactor is a mixture of stabilized alumina and noble metals of the platinum group (1-5%). Said catalyst allows carrying out the pre-reforming of the ethanol to CO and CH₄ at low temperature while at the same time minimizing the formation of coke under said conditions. Furthermore, it allows increasing the selectivity of reforming CH₄ and CO obtained in the pre-reforming stage.

As has been mentioned previously, the catalysts are deposited on the walls of the microchannels of the microreactor by immersing the metal monolith or microreactor in a suspension containing the catalyst, a process which is commonly referred to as washcoating. Once the suspension is adjusted, the main characteristics of the catalyst such as adhered load, homogeneity and adhesion are optimized.

The ethanol reforming process is endothermic and therefore requires the supply of heat. The heat demanded by these reactions is generated by a catalytic combustion microreactor (or combustor) which generates sufficient heat to carry out the reforming reaction in optimal conditions.

The choice of a catalytic combustor with respect to a conventional flame combustor allows improving the efficiency and the control of the combustion reaction in all the operation states, optimizing oxygen consumption, minimizing the required excess, improving the safety inside the submarine, due to the absence of flame, reducing the volume needed for the AIP system, enabling a better heat transfer and an efficient operation with multi-fuels, and producing a smaller amount of wastes.

The combustion reactions taking place in the combustor or combustion microreactor are the following:

C₂H₅OH + 3 O₂ → 2 CO₂ + 3 H₂O

CH₄ + 2O₂ → CO₂ + 2H₂O

2H₂ + O₂ → 2H₂O

CO + ½ O₂ → CO₂

The combustor exchanges the heat generated in these exothermic reactions directly with the reforming microreactor. The combustion is controlled by the temperature in the reformer according to the amount of combustion agent introduced therein.

The catalyst used in the combustion reaction must be resistant to deactivation which can be generated by the presence of large amounts of water vapor in the gas stream, in addition to be being capable of carrying out the complete combustion of the unburned substances at temperatures less than 900°C. A catalyst based on a mixture of inorganic oxides and noble metals of the platinum group (5-10% of the composition) is preferably used.

In a particular embodiment, when the reforming subunit comprises two reforming microreactors in parallel, the system then comprises two parallel catalytic combustors exchanging heat directly with each of the reforming microreactors.

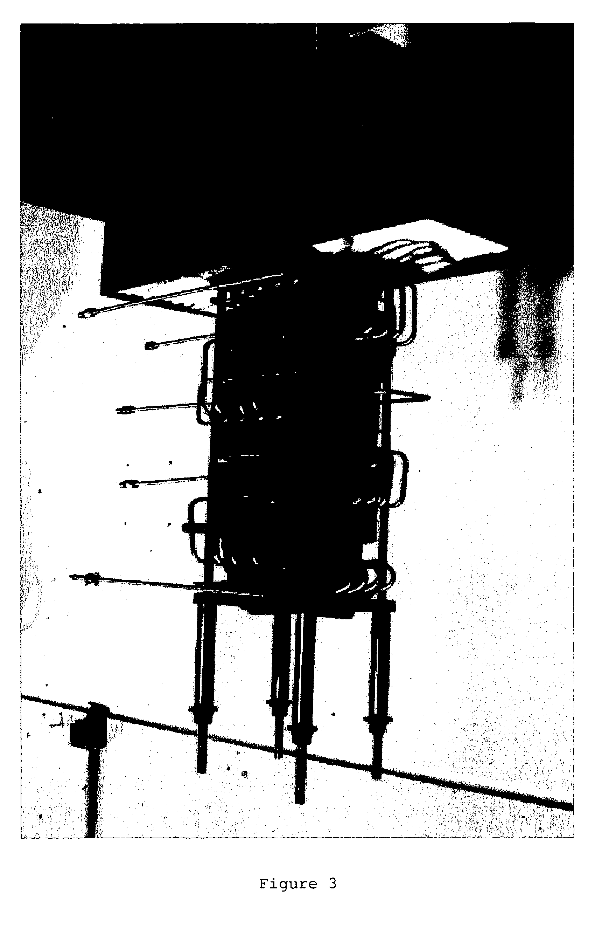

Figure 3 shows a configuration of the reforming cartridge.

As a step prior to the entrance in the pre-reformer, the process reagents (ethanol and water) which are stored in their respective containers, are pumped in liquid state to one or more evaporators wherein they are preheated and evaporated. In a particular embodiment, the ethanol and water are independently heated and evaporated using separate micro heat exchangers which are described below. Both reagents are subsequently introduced in a micromixer wherein they are mixed in the suitable doses and superheated to the operating temperature of the pre-reformer. As an alternative, the process reagents can be pre-mixed in liquid state and subsequently evaporated and superheated together.

The ethanol and water are heated and evaporated by means of the heat supplied by the process gases and/or fumes as will be detailed below.

The ethanol used as a process reagent in the reforming reaction can be chemically synthesized ethanol, ethanol obtained from the fermentation of sugars, or bioethanol, the latter being understood as the ethanol obtained from processing biological matter or biomass.

In a preferred embodiment of the invention, bioethanol from the alcoholic fermentation of sugars and/or cellulose components present in biomass is used. Plants from forest and/or agricultural energy crops, agricultural crop residues, silvicultural treatment residues, forest industry residues, food and agriculture industry residues or livestock farming residues can be used as a source of biomass. The production of ethanol from biomass, or bioethanol, is well known and carried out on a large scale.

### Refining subunit

The reforming subunit generates a hydrogen-rich gas stream, nevertheless, said reformed stream contains significant amounts of carbon monoxide as an unwanted byproduct. The ethanol processing system of the present invention is incorporated in an electric energy generating system which integrates a fuel cell, for which it is necessary to reduce the concentration of said carbon monoxide below 20 ppm, given that the catalyst of the anode of the fuel cell system has a very low tolerance to this compound. To achieve this reduction of the carbon monoxide content with a minimum hydrogen loss, the system of the invention further incorporates a refining or purification subunit comprising a train of adiabatic refining reactors arranged in series which comprises:
(a) at least one adiabatic microreactor wherein a gas-water shift reaction (hereinafter referred to as WGS microreactor) is carried out in the presence of a catalyst;
(b) at least one adiabatic microreactor wherein a preferential oxidation reaction (hereinafter COPROx microreactor) of the carbon monoxide is carried out in the presence of a catalyst; and optionally
(c) an adiabatic methanation microreactor for selective methanation of carbon monoxide in the presence of a catalyst.

In the WGS reactor, the carbon monoxide contained in the reformed stream reacts catalytically with the water vapor contained in the reforming stream itself to form carbon dioxide and hydrogen through the following reaction:

CO + H₂O → CO₂ + H₂

The concentration of carbon monoxide is thus reduced to about 0.5% by volume (dry base). It is a very favorable reaction for the global process given that, at the same time that the concentration of carbon monoxide in the reforming gas is reduced, hydrogen is also produced. It is an exothermic reaction so it is favored at low temperatures.

To that effect, a catalyst selective for the WGS reaction with conversions close to 90% of CO into the reforming gas is used. For example, a catalyst with an approximate composition of 1-5% (mass) in noble metal(s) supported on zirconia is formulated.

In a particular embodiment, two WGS microreactors arranged in series which allow reducing the carbon monoxide content to a concentration of approximately 0.30% by volume (dry base) are used.

The concentration of carbon monoxide at the outlet of the WGS reactor is not low enough to be sent to the fuel cell system. To continue further reducing the carbon monoxide content, there is arranged a COPROx microreactor the operation of which is based on the selective oxidation of carbon monoxide with oxygen according to the following reaction:

CO + ½ O₂ → CO₂

Said microreactor comprises several catalytic beds in which intermediate oxygen injections or atomizations are performed to favor the selectivity towards CO and not towards H₂.

To that end, a catalyst is formulated which is very active in the conversion of CO (close to 90%) at 150°C, three times the stoichiometric amount of O₂ being fed. For example, for the achievement of the COPROx reaction a catalyst with an approximate composition of 1-5% (mass) in noble metal(s) is formulated.

In a preferred embodiment of the invention, and for the purpose of improving the efficiency of the process, at least two COPROx microreactors arranged in series, more preferably three COPROx microreactors arranged in series with intermediate cooling are used to prevent, as much as possible, the destruction of hydrogen, which would take place according to the reaction.

CO + 3H₂ → CH₄ + H₂O

After the three COPROx microreactors reduce the carbon monoxide content to a concentration of approximately 1000 ppm in volume (dry base) which, depending on the cases, may be still higher than that required.

For the purpose of reducing the concentration of CO present after the WGS reaction, there can be arranged a methanation microreactor in which a selective methanation reaction of carbon monoxide is carried out in the presence of a catalyst according to the following reaction:

CO + 3H₂ → CH₄ + H₂O

To carry out this reaction, a catalyst which is highly selective for the methanation of CO is used, maximally preventing hydrogen losses due to secondary reactions such as the methanation of CO₂ or the reverse WGS reaction (RWGS). A catalyst with an approximate composition of 1-5% (mass) in noble metal(s) can be formulated.

Therefore, in a preferred embodiment of the invention, the refining subunit comprises:
(1) at least one WGS microreactor wherein a gas-water shift reaction is carried out in the presence of a catalyst;
(2) at least one COPROx microreactor wherein a preferential oxidation reaction of the carbon monoxide is carried out in the presence of a catalyst; and
(3) a methanation microreactor for selective methanation of carbon monoxide in the presence of a catalyst.

Still more preferably, the refining subunit comprises two WGS microreactors, three COPROx microreactors, and a methanation microreactor for selective methanation of carbon monoxide in the presence of a catalyst. The carbon monoxide content is thus reduced to concentrations below 20 ppm in dry base.

The outlet stream of the purification system thus has a suitable quality for feeding fuel cell systems, particularly fuel cells of the open anode proton exchange membrane type.

The COPROx and methanation catalytic refining configuration can be substituted by industrial physicochemical alternatives such as systems of selective flow through hydrogen-selective palladium membranes or pressure swing adsorption (PSA) systems. Therefore, in particular embodiments, the refining system can comprise:
(1) at least one WGS reactor and one from:
(2.1) a system of selective flow through hydrogen-selective membranes; and
(2.2) a pressure swing adsorption system (PSA).

### Post-combustion subunit

To adjust the waste gases to the conditions required by the CO₂ removal system, the ethanol processing system includes a post-combustion subunit comprising an adiabatic post-combustion microreactor wherein the catalytic combustion of the fumes from the reforming is carried out. This subunit integrates its components in a cartridge as has been specified above.

The combustion microreactor is fed by oxygen as oxidizing agent and as combustion agents (and sometimes oxidizing agents), the waste gases of the process made up in most part by carbon dioxide and water vapor, which do not need to be removed, and by another series of wastes needing to be removed, which include traces of oxygen, methane and hydrogen.

Therefore, the combustion microreactor functions in multi-fuel mode with two oxygen inlets, both variable in reagent and flow proportions, depending on the operation state (steady or transitory for starting or stopping). The inlet of fuel and oxidizing agent in the combustor is efficiently controlled as a result of using an injection system.

The combustion reactions taking place in the post-combustion microreactor or combustor are:

CH₄ + 2O₂ → CO₂ + 2H₂O

2H₂ + O₂ → 2H₂O

The combustion microreactor comprises a catalyst resistant to deactivation which can generate the presence of large amounts of water vapor in the gas stream and capable of carrying out the complete combustion of the unburned substances at temperatures less than 900°C. A catalyst based on a mixture of inorganic oxides and noble metals of the platinum group (5-10% of the composition) is preferably used.

After the combustion in the combustion microreactor ends, the characteristics of the waste gases are compatibles with that required by the CO₂ removal system of a submarine's AIP system.

### Starting subunit

The starting subunit comprises a starting adiabatic catalytic combustion microreactor.

During the start, hot fumes pass through the starting microreactor wherein the catalytic combustion of ethanol and oxygen occurs, preheating the system and generating heat to vaporize the reagents needed in the first phases of the start.

Preferably, said microreactor comprises a catalyst based on a mixture of inorganic oxides and noble metals of the platinum group (5-10% of the composition), capable of generating heat for the initial start by means of combusting ethanol at temperatures lower than 300°C.

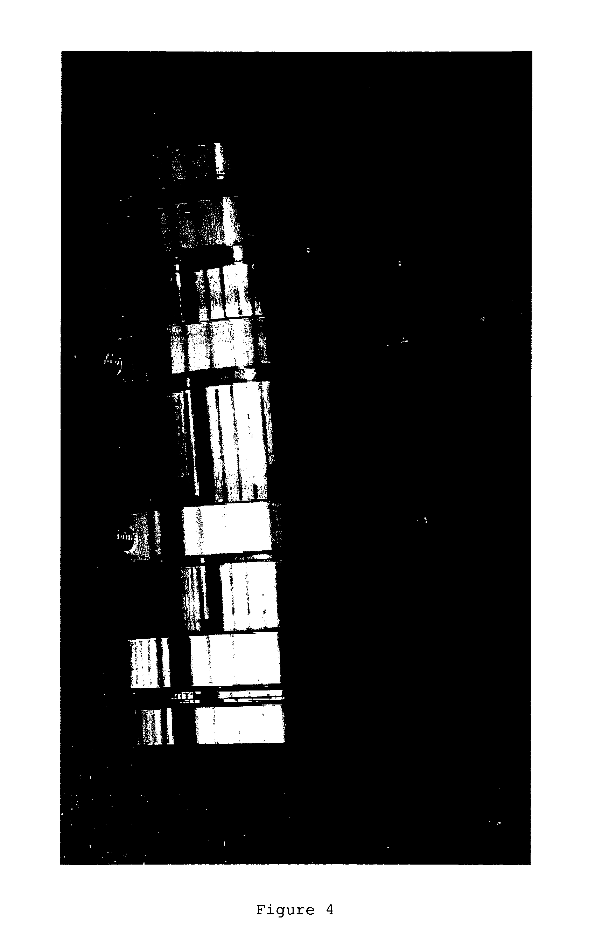

Figure 4 shows a configuration of the WGS, COPROx/methanation, postcombustion and starter cartridge.

### Heat recovery subunit

The ethanol processing system further comprises a heat recovery subunit to optimize the energy efficiency of the entire process. The heat released in some stages of the process is thus recovered, it being used in other stages where the heat supply is necessary, therefore the heat is exchanged directly between the fluids of the process themselves. The ethanol processing system is therefore thermally self-sufficient, producing the vapor necessary for the process and self-managing its condensates. Only the thermal excess is removed by means of heat exchange with any type of cooling fluid.

The heat recovery subunit comprises a set of micro heat exchangers and micromixers distributed in the reforming, refining and post-combustion subunits. The term microexchangers must be understood as a metal structure traversed by micrometric channels allowing efficient heat exchange between two fluids and/or their mixing when it is required by the system.

According to the heat exchange and/or mixing processes taking place in the heat recovery subunit, several types of microexchangers covering all the needs of the ethanol processor of the invention which are described below have been specifically developed:

### A. High temperature microexchanger (Type A)

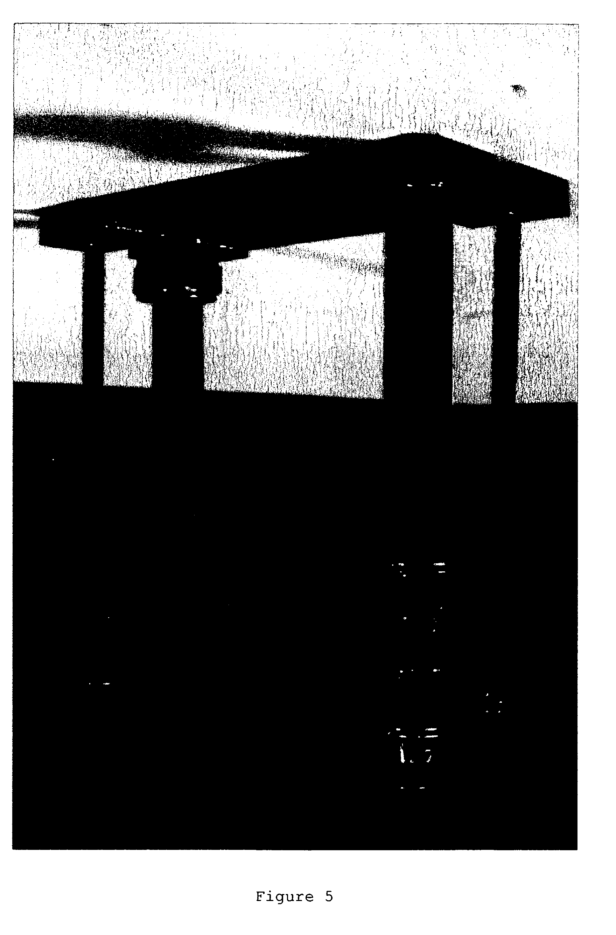

This microexchanger is preferably manufactured by stacking of a series of plates made of an iron, aluminium and chromium alloy (for example Fecralloy®) or stainless steel traversed by micrometric channels with dual arrangement of microchannels in cross-flow which enables an efficient heat exchange. This type of exchanger is diffusion bonded to assure the resistance of the attachments to high operating temperatures (> 450°C). The diffusion bonding is a solid state process resulting from the application of pressure and heat generally in a controlled atmosphere, the sufficient time so that diffusion and coalescence of the metal interphases occur. The operating temperatures tend to be between 25-50% below the melting temperature of the material, thus assuring that the plastic deformation is minimal. This type of bonding allows obtaining a complete sealing of the interstitials of the package of stacked plates without sealing the microchannels generated on the surface of the metal plates. The configuration of the type A microexchanger is shown in Figure 5.

### B. Low temperature microexchanger (Type B)

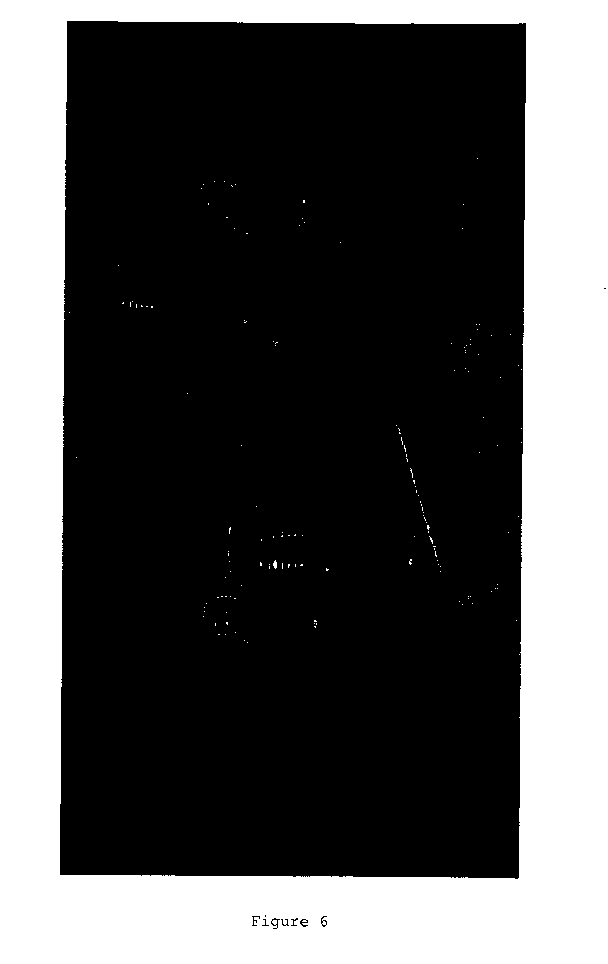

This microexchanger is preferably manufactured by means of stacking a series of plates made of an iron, aluminium and chromium alloy (for example Fecralloy®) or stainless steel traversed by micrometric channels with dual arrangement of microchannels in cross-flow which enables an efficient heat exchange. This type of exchanger is bonded by perimeter laser bonding, a technique which allows attaching metal pieces by the action of a locally concentrated laser beam, causing the coalescence of the contacting metal surfaces and attaching them upon cooling. This technique allows a compromise between the performance of the equipment in less demanding conditions (operating T < 450°C) and the finances for its manufacturing and production. The configuration of the type B microexchanger is shown in Figure 6.

### C. Microexchanger/mixer of process gas with process water and ethanol (Type C)

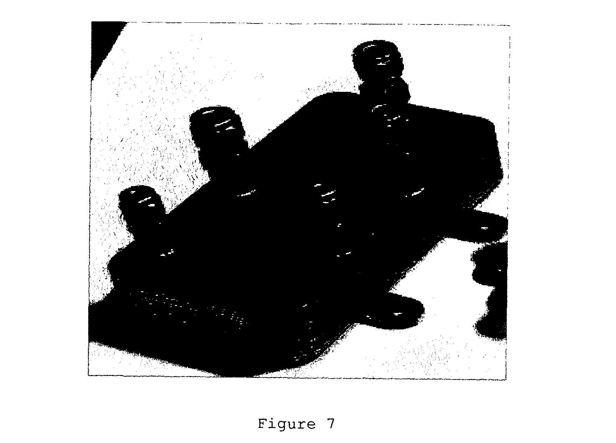

This microexchanger is preferably manufactured with an iron, aluminium and chromium alloy (for example Fecralloy®) or stainless steel traversed by micrometric channels with dual arrangement of microchannels in cross-flow which enables an efficient mixing and heat exchange. This equipment is bonded by diffusion bonding and its configuration is shown in Figure 7.

Thus, in a particular embodiment, the heat recovery subunit comprises a first type A micro heat exchanger located at the outlet of the reformer which allows reducing the temperature of the reformed gas to conditions suitable for being able to be treated in the refining subunit. Said first microexchanger is located in the cartridge of the reforming subunit and reduces the temperature of the reformed gas by means of heat transfer with the process water (the water which is vaporized in the stage prior to pre-reforming). In this case, the temperature at the outlet of the micro heat exchanger is fixed by a constant set point. To that end, a thermostatic valve directly regulates the entrance of water with said temperature.

The heat recovery subunit can further comprise a second type B microexchanger located at the outlet of the WGS microreactor which allows reducing the temperature of the process gas to conditions suitable for being able to be treated in the COPROx microreactor. Said second microexchanger is located in the cartridge of the refining subunit and reduces the temperature of the reformed gas by means of heat transfer with the ethanol which is vaporized in the stage prior to the pre-reforming.

The heat recovery subunit further includes a third type B micro heat exchanger at the outlet of the COPROx microreactor for the purpose of adjusting the temperature of the process gas to the temperature required by the methanation microreactor (in the event that the latter is present) or by the receiving system downstream of the ethanol processing system, i.e., the fuel cell. Said third microexchanger is located in the cartridge of the refining subunit and cools the process gas from the COPROx microreactor preheating the process water.

Preferably, when two or more WGS microreactors arranged in series are used, the heat recovery subunit further includes intermediate type A micro heat exchangers located between said microreactors which allow cooling the gas therefrom preheating and/or evaporating process ethanol and/or water. Said microexchangers are also located inside the cartridge of the refining subunit.

Preferably, when two or more COPROx microreactors arranged in series are used, the heat recovery subunit further includes intermediate type B micro heat exchangers located between said microreactors which allow cooling the gas therefore preheating and/or evaporating process ethanol and/or water. Said microexchangers are also located in the cartridge of the refining subunit.

In another particular embodiment, the heat recovery subunit further comprises a fourth type A micro heat exchanger vaporizing the ethanol and a fifth type A micro heat exchanger vaporizing the process water (mentioned above and used in the stage prior to the pre-reforming) by means of cooling the fumes from the combustion of wastes of the fuel cell system. Both microreactors are located in the cartridge of the post-combustion subunit.

In another particular embodiment, the heat exchange subunit further comprises a type C micromixer for mixing and superheating the process water and ethanol by means of cooling the fumes from the combustion of wastes of the fuel cell system. Said micromixer is located in the cartridge of the post-combustion subunit.

In another particular embodiment, this heat recovery subunit further comprises a sixth type B micro heat exchanger adjusting the temperature of the reformed gas to the conditions required by the fuel cell system and a seventh type B micro heat exchanger adjusting the temperature of the waste gases to the conditions required by the CO₂ removal system. Said temperature adjustment is performed by means of heat transfer with at least one cooler with a cooling fluid, such as glycolated water for example. The consequence of this cooling is the condensation of the water contained in the reformed gas until the saturation point, this water being recovered for its reuse in the reforming process.

Thermal oil, such as for example Terminol® or the like, given that it is stable up to 400°C (in operation) and does not wear the equipment or the networks of pipes, or cooling water which can be mixed with glycol to be able to work with low outlet temperatures of the water, can be used as a heat exchange fluid.

In a preferred embodiment, the ethanol processing system of the invention comprises:
a) a reforming subunit comprising:
   a.1) an adiabatic pre-reforming microreactor or pre-reformer in which the ethanol is catalytically converted into methane, hydrogen, carbon monoxide and carbon dioxide;
   a.2) two isothermal reforming microreactors or reformers installed in parallel in which the methane contained in the pre-reformed gas stream obtained in the pre-reforming microreactor is catalytically converted into hydrogen;
   a.3) two catalytic combustion adiabatic microreactors installed in parallel providing the thermal energy required by each of the reforming microreactors;
   a.4) a first micro heat exchanger located at the outlet of the reformers wherein said first micro heat exchanger allows reducing the temperature of the reformed gas to conditions suitable for being able to be treated in the refining subunit.
b) a purification or refining subunit comprising:
   b.1) two adiabatic microreactors or WGS microreactors wherein a gas-water shift reaction is carried out in the presence of a catalyst; and
   b.2) three adiabatic microreactors or COPROx microreactors wherein a preferential oxidation reaction is carried out in the presence of a catalyst; and optionally
   b.3) an adiabatic methanation microreactor wherein the selective methanation of carbon monoxide is carried out in the presence of a catalyst;
   b.4) a second micro heat exchanger located at the outlet of the first WGS microreactor;
   b.5) a third micro heat exchanger located at the outlet of the second WGS microreactor which allows reducing the temperature of the process gas to conditions suitable for being able to be treated in the first COPROx microreactor;
   b.6) a fourth micro heat exchanger located at the outlet of the first COPROx microreactor;
   b.7) a fifth micro heat exchanger located at the outlet of the second COPROx microreactor;
   b.8) a sixth micro heat exchanger located at the outlet of the third COPROx microreactor for the purpose of adjusting the temperature of the process gas to that required by the methanation microreactor;
c) a post-combustion subunit comprising:
   c.1) an adiabatic microreactor wherein the catalytic combustion of the fumes from the reforming is carried out;
   c.2) a seventh micro heat exchanger vaporizing the process ethanol by means of cooling the fumes from the combustion of wastes of the fuel cell system;
   c.3) an eighth micro heat exchanger vaporizing the process water by means of cooling the fumes from the combustion of wastes of the fuel cell system; and
   c.4) a micromixer wherein the process water and ethanol are mixed and superheated as a step prior to the entrance in the pre-reformer.
d) a starting subunit comprising at least one catalytic combustion adiabatic microreactor wherein ethanol combustion is carried out with oxygen for providing the thermal energy required by the reforming microreactors;
wherein each of the subunits a), b), c) and d) is configured in the form of a compact cartridge.

In a preferred embodiment of the invention and for the purpose of complying with the submarine safety requirements concerning leakage control, the ethanol processing system further incorporates a leakage catalytic microreactor. Its mission is to reduce all the possible leakages to the demanded levels which can occur inside the ethanol processing system in any operation condition, both normal and degraded. The leakages are conducted by forced ventilation to the leakage catalytic microreactor.

Said leakage microreactor consists of an adiabatic microreactor in which there is preferably deposited a catalyst based on a mixture of inorganic oxides and noble metals of the platinum group (5-10% of the composition), resistant to deactivation by the presence of large amounts of water vapor in the gas stream, and capable of carrying out the complete combustion of the unburned substances at temperatures less than the 900°C.

In a particular embodiment, the ethanol processing system of the invention further comprises a fluid management subunit comprising: an ethanol pump, a process water pump, a process condensate pump, a feeding blower for feeding cathodic waste, a fume blower, a process water tank, a process gas condensate tank, a fume condensate tank and a water vapor cauldron.

In a particular embodiment, the ethanol processing system of the invention further comprises a leakage controlling subunit comprising: a feeding blower for forced feeding of leakages and a leakage catalytic combustor.

The ethanol processing system can further comprise an electric supply and interconnection subunit as well as a command and control subunit.

Preferably, all the subunits of the ethanol processing system previously mentioned are mounted on common structural base and anti-vibration supports, thus making the ethanol processing system a solid and transportable assembly.

### Ethanol reforming method

In an additional aspect, the present invention relates to an ethanol reforming method comprising:
- a pre-reforming stage in which the ethanol is catalytically converted into methane, hydrogen, carbon monoxide and carbon dioxide;
- a subsequent reforming stage in which the methane contained in the pre-reformed gas stream obtained in the pre-reforming stage is catalytically converted into hydrogen; and
- a refining stage wherein the hydrogen obtained in the reforming stage is purified for reducing the carbon monoxide content to levels acceptable by the anode of a fuel cell;
wherein said stages are carried out using an ethanol reforming system as has been defined above.

The method for reforming ethanol to produce a hydrogen-rich stream takes place in two main stages: the first stage is the pre-reforming stage in which, as has been explained above, the ethanol is catalytically converted in the pre-reformer, forming mainly methane and hydrogen. The second stage is the reforming stage, in which the methane contained in the pre-reformed stream is catalytically converted into hydrogen in the reformer.

To feed the pre-reformer with the process reagents, water and ethanol, the latter can be pumped in liquid state from their respective containers wherein they are stored, to one or more evaporators wherein they are preheated and evaporated. In a particular embodiment, the ethanol and water are independently heated and evaporated using aforementioned fourth and fifth micro heat exchanger, respectively. Both reagents are subsequently introduced in a micromixer, such as that previously mentioned, wherein they are mixed in the suitable doses and superheated to the operating temperature of the pre-reformer. As an alternative, the process reagents can be pre-mixed in liquid state and subsequently evaporated and superheated together.

The heat required in the reforming stage is supplied by catalytic combustor as defined above. The heat generated by combustion is directly exchanged with the reformer. The combustion is controlled by the temperature in the reformer according to the amount of combustion agent introduced therein.

The reformed stream obtained after the ethanol reforming method is used, after its subsequent purification, to feed a fuel cell system.

In said embodiment, the catalytic combustor is fed with the waste streams from the fuel cell system which, by means of the combustion thereof, provides the heat required for the reforming reactions. Said waste streams travel a countercurrent path with respect to the gas in the reforming process thereof. These are:
- anode waste: this stream is a combustible stream formed by hydrogen and methane, except the part used in the production of electricity in the fuel cell system, and other inert gases;
- cathode waste: this stream is a combustion agent formed mainly by oxygen and water.

The waste stream of the cathode exits the fuel cell system at atmospheric pressure, and to be introduced in a controlled manner in the catalytic combustion stage it is desirable to increase its pressure. To that end, a compressor is used which raises the pressure to the pressure required by the process. Screw or claw lobe rotary type compressors, which are robust and energetically efficient, can be used for such purpose.

In this embodiment, the combustor is furthermore capable of burning different streams according to the operation phase. For example, in steady-state or normal operation, the thermal energy generated mainly comes from the combustion of the anodic (combustion agent) and cathodic (fuel) waste streams of the fuel cell, a suitable temperature in the reforming area thus being reached, according to demand, the correct conditions on the catalytic reforming reaction side being assured, thus allowing the maximization of hydrogen production. Additionally, it is usually necessary to supply an additional amount of oxygen.

The additional oxygen used as a combustion agent, as well as the oxygen required by the fuel cell, can come from an oxygen storing tank, thus not requiring the supply of air from the exterior, allowing incorporating said system into an air-independent propulsion system.

In turn, during the start, hot fumes pass through the starting adiabatic catalytic combustion microreactor mentioned above where the combustion of ethanol with oxygen occurs, preheating the system and generating heat for vaporizing the reagents necessary in the first phases of the start.

In the case of minimum operation of the ethanol processing system, which coincides with the minimum load state of the system and which corresponds with a reforming gas production in an amount sufficient for sending to the cell 25% of the hydrogen in steady state, the waste streams of the cell and part of the reforming gas are burned.

During the reforming reaction, significant amounts of carbon monoxide are produced as a byproduct. The fuel cell system requires the content of said compound in the feed of the cell to be less than 20 ppm, so it is necessary to incorporate additional purification stages which allow reducing the carbon monoxide content to minimum concentrations acceptable by the anode of the fuel cell.

Therefore, the ethanol reforming method further comprises a refining or purification or reduction process of the concentration of carbon monoxide which in turn comprises:
- a gas-water shift reaction (hereinafter referred to as WGS reaction) performed in the WGS microreactor, in which part of the carbon monoxide contained in the reformed stream reacts catalytically with the water contained in the same stream, forming carbon dioxide and hydrogen;
- a preferential oxidation reaction of carbon monoxide with oxygen performed in the COPROx microreactor,; and optionally
- a selective methanation reaction of carbon monoxide in the presence of a catalyst.

The WGS reaction is performed in the WGS microreactor described above. To that end, the reforming gas stream from the reformer is previously passed through the first micro heat exchanger located at the outlet of the reformer for the purpose of reaching the optimal WGS reaction temperature. Said first micro heat exchanger cools the reforming gas stream by means of heat transfer, evaporating process water as described above. In this case, the temperature at the outlet of the micro heat exchanger is fixed by a constant set point. To that end, a thermostatic valve directly regulates the entrance of water with said temperature.

The WGS reaction is a very favorable reaction for the global process given that, at the same time that the concentration of carbon monoxide in the reforming gas is reduced, hydrogen is also produced. It is an exothermic reaction so it is favored at low temperatures.

For the purpose of compensating for the temperature increase occurring in the WGS microreactor due to the exothermic reaction produced, the process gas is cooled in the second microexchanger located at the outlet of the WGS microreactor which allows reducing the temperature of the process gas to conditions suitable for being able to be treated in the COPROx preferential oxidation reaction. Said second microexchanger reduces the temperature of the reformed gas by means of heat transfer with the ethanol which is vaporized in the stage prior to the pre-reforming.

The WGS reaction stage is preferably performed using two WGS microreactors arranged in series. In this case, to compensate for the temperature increase occurring in the first WGS microreactor, the process gas is cooled in an intermediate micro heat exchanger before being introduced in the second WGS microreactor. Said micro heat exchanger located between both WGS microreactors cools the gas from the first WGS microreactor preheating the process water.

After the WGS reaction, the carbon monoxide content is reduced to a concentration of approximately 0.30% in volume (dry base), still being much greater than those needed for integration with the fuel cell system.

To continue further reducing the carbon monoxide content, a selective oxidation reaction of carbon monoxide with oxygen is carried out to provide carbon dioxide. Said reaction is carried out in the aforementioned COPROx microreactor. This reaction requires the intermediate injection or atomization of oxygen to favor the selectivity towards CO and not towards H₂.

Preferably, to perform this preferential oxidation stage:
- a catalyst which is highly selective for the oxidation of carbon monoxide is used for the purpose of preventing as much as possible the oxidation of hydrogen to form water;
- a rigorous control of the temperature is carried out given that work must be done at a temperature favoring this reaction to the detriment the formation of water;
- a precise metering of oxygen is carried out to reduce as much as possible the oxidation of hydrogen.

Also in this case, the oxygen required in the selective oxidation reaction can come from an oxygen storing tank.

For the purpose of adjusting the temperature of the process gas to the temperature required by the methanation reactor or by the receiving system thereof downstream of the ethanol processing system, said process gas is passed through the third micro heat exchanger located at the outlet of said COPROx microreactor. Said third microexchanger cools the process gas coming from the COPROx microreactor preheating the process water..

The oxidation reaction selective stage is preferably performed using two or more COPROx microreactors arranged in series, more preferably three COPROx microreactors arranged in series, in which case, and to compensate for the temperature increase occurring in the different COPROx microreactors, the process gas is cooled in intermediate micro heat exchangers located between said COPROx microreactors which allow cooling the gas therefore preheating the process water.

To further reduce the carbon monoxide content of the stream from the WGS reaction, a selective methanation reaction of carbon monoxide is carried out. Said methanation reaction is carried out in the aforementioned methanation microreactor.

The outlet stream after the purification process thus has a suitable quality for being integrated and fed to fuel cell systems, particularly to fuel cells of the open anode proton exchange membrane type.

By means of the described method, the heat released in some stages of the process (reforming, WGS and COPROx) is recovered by using it in others wherein the supply of heat is necessary (evaporation of the starting water and ethanol). The heat exchange is performed directly between the process fluids themselves. Furthermore, the waste streams from the fuel cell system are reused which, by means of their catalytic combustion, supply the heat necessary for producing the ethanol reforming chemical reactions.

Thus, the ethanol used as a starting reagent is evaporated in the fourth micro heat exchanger by means of the heat supplied by the cooling of the process gas entering the COPROx preferential oxidation microreactor, as well as by the cooling of the fumes from the combustion of waste of the fuel cell system.

In turn, the water used as a starting reagent is evaporated in the fifth heat exchanger by means of heat transfer with the hot process gas exiting the reformer, as well as by the cooling of the fumes from the combustion of waste of the fuel cell system, and it is preheated by means of heat transfer with the process gas exiting the COPROx microreactor, as well as, where appropriate, with the process gas exiting the intermediate micro heat exchangers located between the WGS and COPROx microreactors.

Finally, the system ends the adjustment of the temperature of the reformed gas to the conditions required by the fuel cell system by means of heat transfer with a cooling of this cooling is the condensation of the water contained in the reformed gas until the saturation point, this water being recovered in a condensate separating tank for its reuse in the reforming process.

The unburned fumes and fuels from the catalytic combustor of the reforming subunit are preferably removed in a safe and controlled manner. For such purpose, a post-combustion adiabatic microreactor located in the post-combustion subunit wherein the combustion of these gases is ended by means of the combustion reactions mentioned above.

The still hot fumes from these reactions are preferably cooled by means of heat exchange with a cooling fluid, such as glycolated water for example, which causes the condensation of the water contained therein which is separated and taken to a condensate separating tank for its reuse in the reforming process.

Finally, and preferably, the cold fumes are compressed and aspirated by a fume blower which increases the pressure thereof to the pressure required by the system wherein the CO₂ is removed.

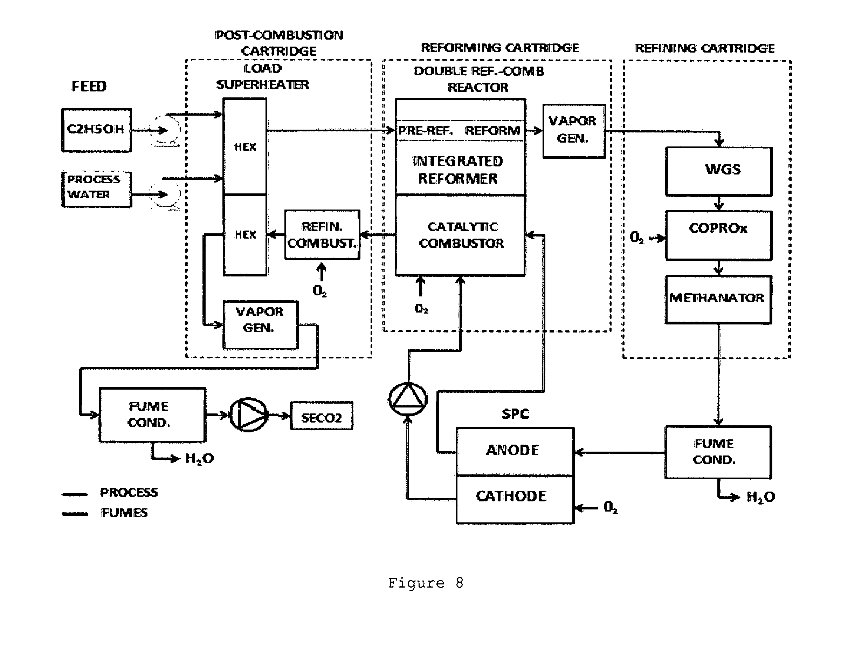

A representative diagram of the global ethanol reforming process is shown in Figure 8.

In an additional aspect, the processing system defined above can be incorporated in any motor vehicle propelled by a fuel cell system. Nevertheless, due to the compactness of the system particularly described and to its design in the form of detachable subunits, as well as due to the possible administration of oxygen from storage tanks, it is particularly suitable for its integration in air-independent propulsion systems, particularly in a submarine.

### Embodiment of the invention

This embodiment describes a method for reforming bioethanol which uses an ethanol processing system configured in compact subunits as defined above and which comprises a double ethanol reformer, two WGS reactors and three COPROx reactors, in addition to a heat recovery and fume removal system, and which is coupled to a fuel cell system.

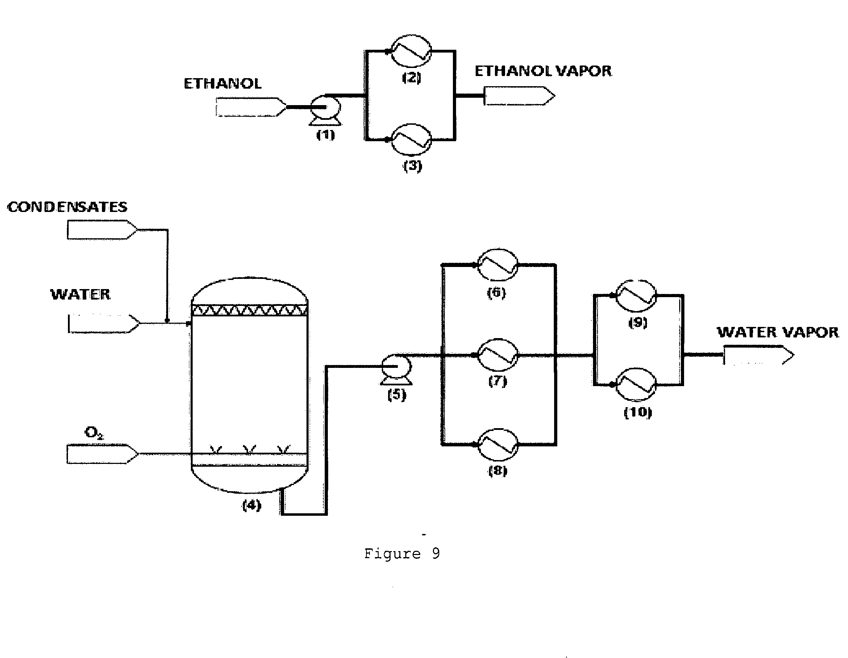

The process water and bioethanol feeding system is shown in Figure 9.

The starting bioethanol in liquid state is driven by means of a pump (1) to two micro heat exchangers placed in parallel:
- in the first of these micro heat exchangers (2), the bioethanol is vaporized by means of the heat supplied by the cooling of the process gas entering the first of the COPROx microreactors. Said micro heat exchanger is installed inside the refining subunit;
- in the second of the micro heat exchangers (3), the bioethanol is vaporized by means of the cooling of the fumes from the combustion of waste of the fuel cell system. This micro heat exchanger is installed inside the post-combustion subunit.

The bioethanol flow is controlled, according to the needs of the process, by means of a flow recycle after the pump, which allow giving flexibility to the system.

During the starting phase, the bioethanol is pumped to a starter arranged in the cartridge of the starting subunit wherein the combustion with oxygen is performed to preheat the different devices of the ethanol processing system of the invention.

In turn, the process water is stored in a tank (4). The water from the fuel cell system and the condensed water from the vertical condensate separating tank reaches said tank. In this tank, the dissolved gases which have been trapped in the liquid during the condensation and cooling are furthermore degassed.

The degassing is mainly performed by means of two stages: in the first stage the water is passed through a bed which distributes the water, facilitating the desorption of the dissolved gases and it is ended by means of injecting oxygen into the bottom of the tank. In the second stage, the gases from the injection plus the recovered dissolved gases traverse an aerator to remove the possible liquid droplets entailed during the process.

The degassed process water is driven by means of a fed pump (5), initially distributing it to three preheaters. The water flow is controlled by means of a flow recycle which allow giving flexibility to the system.

The water preheaters work in parallel they are installed in the cartridge of the refining subunit and are:
- a preheater or micro heat exchanger (6) wherein the water is preheated by means of the heat supplied by the cooling of the process gas entering the second COPROx microreactor;
- a second preheater or micro heat exchanger (7) wherein the water is preheated by means of the heat supplied by the cooling of the process gas entering the third COPROx microreactor;
- a third preheater or micro heat exchanger (8) wherein the water is preheated by means of the heat supplied by the cooling of the process gas exiting the third COPROx microreactor.

Then the water thus preheated is mixed and homogenized and is distributed in two evaporators or micro heat exchangers installed in parallel:
- in the first of these micro heat exchangers (9), the process water is evaporated by means of heat transfer with the hot process gas exiting the reformers. This micro heat exchanger is installed inside the cartridge of the reforming subunit;
- in the second of these micro heat exchangers (10), the process water is evaporated by means of heat transfer with the fumes from the combustion of waste of the fuel cell system. This micro heat exchanger is included inside the cartridge of the post-combustion subunit.

The process water vapor is subsequently sent to the process line to be mixed and superheated with the bioethanol in the micromixer located in the cartridge of the post-combustion subunit to later feed this mixture to the reformer.

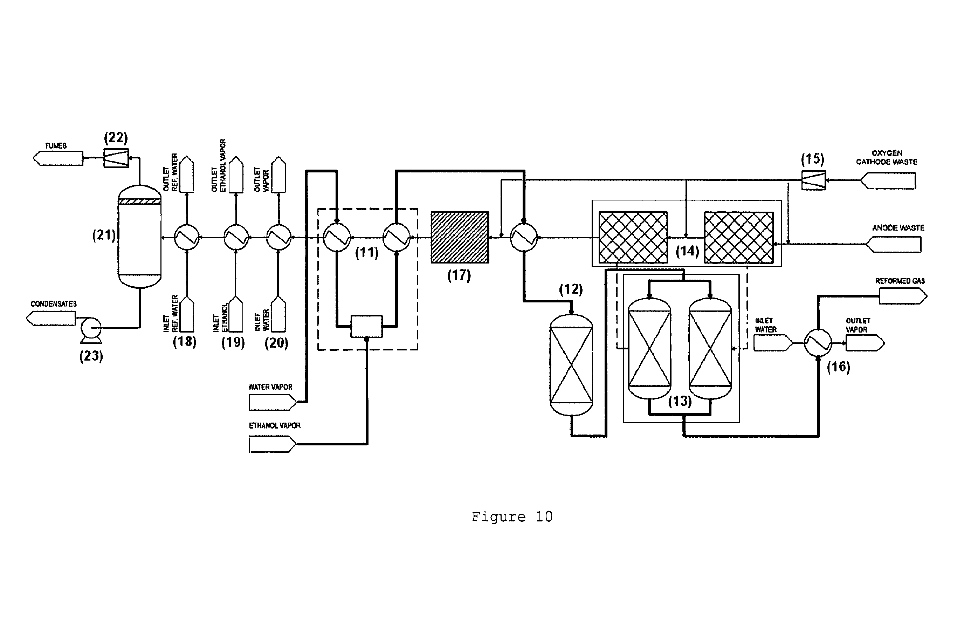

The reforming and combustion system is shown in Figure 10.

The mixture of reagents (bioethanol and water) superheated in the micromixer (11) located in the post-combustion subunit is introduced in the reforming subunit wherein it is pre-reformed in the per-reforming microreactor or pre-reformer (12) and reformed in two reforming microreactors (or reformers) (13) located in parallel which are heated by heat transfer with two catalytic combustors (14) which burn the wastes of the fuel cell system countercurrent to the process line.

The gaseous reagents stream from the micromixer is fed in the pre-reformer, catalytically transforming it into a methane- and hydrogen-rich stream.

The process gas from the pre-reformer is identically distributed between the two reformers installed in parallel, wherein it is heated instantaneously using the combustion heat generated in the two catalytic combustors.

The combustion in the catalytic combustors is controlled by the temperature in the reformers according to the amount of combustion agent (oxygen and cathode residue) which is introduced in the combustors through the blower (15).

In a stage after the start in which the production of reforming gas begins, the reforming gas is burned through two bypasses.

At steady state, the anode and cathode waste streams are mainly burned, although the supply of a small amount of additional oxygen is necessary.

The anode waste from the fuel cell is introduced in the reforming subunit in the first combustion area of each of the combustors in equal parts. The cathode waste is compressed through a blower and is injected in the combustion area of each microreactor by controlling the temperature in the reformers of the process. To prevent the temperature in the combustors from shooting up, attemperation CO₂ from the fume recycle can be fed in all the operation states.

The reforming stream from both reformers is then sent to the refining subunit after adjusting its temperature in a micro heat exchanger (16). Said heat exchanger is integrated inside the reforming subunit and cools the reforming gas stream by means of heat transfer, evaporating process water as described above.

To achieve reducing the carbon monoxide content to values less than 20 ppm, the ethanol processing system incorporates a refining subunit including a train of microreactors in series formed by two WGS microreactors, three COPROx microreactors and a methanation microreactor.

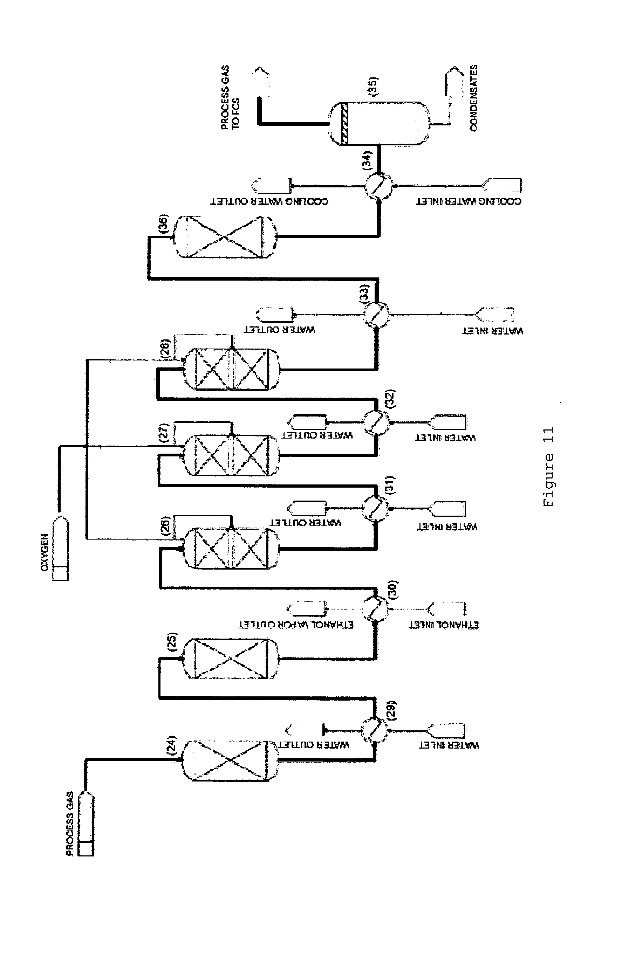

A diagram of the refining process is shown in Figure 11.

The cooled reforming gas stream is fed to the first WGS microreactor (24), wherein the carbon monoxide reacts catalytically with the water vapor contained in the reforming stream itself to form carbon dioxide and hydrogen.

To compensate for the temperature increase occurring in the first WGS microreactor (24), the process gas is cooled in a micro heat exchanger (29) by means of heat transfer, preheating the process water before being introduced in the second WGS microreactor (25).

In said second WGS microreactor (25), a new catalytic reaction of carbon monoxide with the water contained in the process gas is carried out. It is thus achieved that the carbon monoxide content in the reformed gas is approximately 0.30% by dry base volume at the outlet of these two microreactors.

The hot process gas exiting the second WGS microreactor (25) due to the exothermic reaction is cooled in a micro heat exchanger (30) by means of heat transfer, heating the starting bioethanol.

The two micro heat exchangers (29, 30) used in the WGS reaction are included in the refining subunit.

The concentration of carbon monoxide at the outlet of the WGS microreactors is not low enough to be sent to the fuel cell system. To continue further reducing the carbon monoxide content, there are three COPROx microreactors in series the operation of which is based on the selective oxidation of carbon monoxide to provide carbon dioxide, preventing, as much as possible, the destruction of hydrogen.

The outlet stream of the second WGS microreactor is fed to the first COPROx microreactor (26) after having been cooled.

The process gas at the outlet of this first COPROx microreactor (26) is fed to the second COPROx microreactor (27) after having been cooled in a micro heat exchanger (31) located inside the refining subunit.

The process gas also passed through the third and last COPROx microreactor (28) after having been cooled in a micro heat exchanger (32) located inside the refining subunit.

The COPROx microreactors used each have two beds with intermediate oxygen injections such that the required selectivity towards carbon monoxide and not towards hydrogen is maximally optimized.

The gaseous oxygen which is added in these reactions is from an oxygen storing tank.

The micro heat exchangers (31, 32) intermediate to the microreactors with COPROx technology are installed directly inside the refining subunit to limit the heat losses and increase the safety in the process, the volume required for the bioethanol processing system thus being reduced.

The process gas passes through the selective methanation microreactor (36) after having been cooled in a micro heat exchanger (33) located inside the refining subunit.

The microexchanger (31) located between the first and second COPROx microreactor (26 and 27, respectively) cools the stream exiting the first COPROx microreactor (26) to the temperature suitable for the following catalytic stage by means of heat transfer, preheating the process water.

The microexchanger (32) located between the second and third COPROx microreactor (27 and 28, respectively) cools the stream exiting the second COPROx microreactor (27) to the temperature suitable for the following catalytic stage by means of heat transfer, preheating the process water.

Finally, and for the purpose of adjusting the temperature of the process gas to the temperature required by the fuel cell system, the reformed gas passes through a condenser (34) wherein its temperature is reduced by condensing water by means of heat transfer with glycolated water as a cooling fluid. The consequence of this cooling is the condensation of part of the water contained in the gas until the saturation point.

This water is recovered in a separating tank (35) to be reused in the process. This tank is a vertical tank wherein the liquid contained in the process stream is recovered by gravity. It furthermore has an aerator, wherein the separation of the liquid droplets which can be entrained by the gas in circulation is ended.

In turn, the unburned fumes and fuels from the reforming subunit are introduced in the post-combustion subunit wherein the combustion thereof ends and they are cooled in the micro heat exchangers (19, 20), transmitting their heat to the process according to the needs of the system.

Thus, said fumes and combustibles are introduced in a post-combustion adiabatic microreactor (17). In said microreactor, the combustion agent gases from the residue of the cathode of the cell by means of a blower (15), and the supply oxygen if necessary, are further introduced in a controlled manner to achieve a stoichiometric combustion and to prevent the presence of wastes or oxygen in the final fumes. This is achieved by means of a series of high-precision analyzers installed downstream of the post-combustion subunit which regulate the injection of combustion agent.

To control the combustion temperature and to prevent it from shooting up, causing hot points which can affect the integrity and correct operation of the combustion microreactors, there is an injection of attemperation water in this combustion microreactor, in the event that the CO₂ attemperation methods of the rest of the combustors are not enough.

The still hot fumes are cooled by means of heat exchange with glycolated water in a micro heat exchanger (18), which causes the condensation of the water contained in the fumes which is separated in a separating tank (21) by gravity. Due to the fact that the condensates of this tank work at very low pressures, they must be driven by means of a pump (23) to be reintroduced in the system. Therefore, there is a level control in the tank.

Finally, the cold fumes are compressed by a blower (22) which aspirates the fumes of the combustion system, raising the pressure thereof to the pressure required by the CO₂ removal system. These cold and dry fumes are furthermore partially bypassed to introduce them in the CO₂ combustion attemperation system.

The yields of the bioethanol processing system are the following:
1) Maximum specific consumption of oxygen : 0.237 Kg/KWh
2) Maximum specific consumption of bioethanol: 0.327 Kg/KWh
3) Maximum production of hydrogen gas: 0.073 Kg/KWh
4) Minimum production of hydrogen gas: 0.018 Kg/KWh
5) Does not require continuous feeding of process water
6) Electric self consumption (steady state): 15 kW
7) Composition and flow rate of final reforming gas (steady state):

| Compound | Kg/h | Molecular weight (g/mol) | Moles/h | Nl/h | % |
|---|---|---|---|---|---|
| O₂ | 0.0 | 32.0 | 0.0 | 0.0 | 0.0 |
| C₂H₅OH | 0.0 | 46.0 | 0.0 | 0.0 | 0.0 |
| H₂O | 11.0 | 18.0 | 611.1 | 13688.9 | 3.9 |
| CO | 0.0 | 28.0 | 0.0 | 0.0 | 0.0 |
| CO₂ | 169.0 | 48.0 | 3520.8 | 78866.7 | 22.7 |
| CH₄ | 6.0 | 16.0 | 375.0 | 8400.0 | 2.4 |
| H₂ | 22.0 | 2.0 | 11000.0 | 246400.0 | 70.9 |

8) Composition and flow rate of waste gas to SECO₂ (steady state):

| Compound | Kg/h | Molecular weight (g/mol) | Moles/h | Nl/h | % |
|---|---|---|---|---|---|
| O₂ | 0.0 | 32.0 | 0.0 | 0.0 | 0.0 |
| C₂H₅OH | 0.0 | 46.0 | 0.0 | 0.0 | 0.0 |
| H₂O | 8.0 | 18.0 | 444.4 | 9955.6 | 10.5 |
| CO | 0.0 | 28.0 | 0.0 | 0.0 | 0.0 |
| CO₂ | 181.0 | 48.0 | 3770.8 | 84466.7 | 89.5 |
| CH₄ | 0.0 | 16.0 | 0.0 | 0.0 | 0.0 |
| H₂ | 0.0 | 2.0 | 0.0 | 0.0 | 0.0 |

9) Volume : 10 m³

## Claims

1. An ethanol processing system suitable for its integration in a fuel cell-based air-independent propulsion system wherein said ethanol processing system comprises:
a) a reforming subunit comprising:
a.1) an adiabatic pre-reforming microreactor or pre-reformer wherein the ethanol is catalytically converted into methane, hydrogen, carbon monoxide and carbon dioxide;
a.2) at least one isothermal reforming microreactor or reformer wherein the methane contained in the pre-reformed gas stream obtained in the pre-reforming microreactor is catalytically converted into hydrogen; and
a.3) at least one catalytic combustion adiabatic microreactor providing the thermal energy required by the reformer;
b) a purification or refining subunit comprising:
b.1) at least one adiabatic microreactor or WGS microreactor wherein a gas-water shift reaction is carried out in the presence of a catalyst; and
b.2) at least one adiabatic microreactor or COPROx microreactor wherein a preferential oxidation reaction is carried out in the presence of a catalyst; and optionally
b.3) an adiabatic methanation microreactor wherein the selective methanation of carbon monoxide is carried out in the presence of a catalyst;
c) a post-combustion subunit comprising an adiabatic microreactor wherein the catalytic combustion of the fumes from the reforming is carried out;
d) a starting subunit comprising at least one catalytic combustion adiabatic microreactor wherein ethanol combustion is carried out with oxygen for providing the thermal energy required by the reforming microreactor; and
e) a heat recovery subunit;
wherein each of the subunits a), b), c) and d) is configured in the form of a compact cartridge;
and wherein the heat recovery subunit comprises an assembly of microexchangers and micromixers distributed in subunits a), b) and c).

2. The ethanol processing system according to claim 1, wherein the different microreactors defined in claim 1 comprise a platinum-based catalyst or a catalyst based on a noble metal of the platinum family, said catalyst being supported on an inorganic oxide homogenously deposited on a metal substrate.

3. The ethanol processing system according to any of the preceding claims, wherein the different microreactors defined in claim 1 are manufactured with an iron, aluminium and chromium alloy and stainless steel.

4. The ethanol processing system according to any of the preceding claims, wherein the ethanol to be reformed is bioethanol.

5. The ethanol processing system according to any of the preceding claims, wherein the reforming subunit comprises a reformer comprising:
a.1) an adiabatic pre-reforming microreactor wherein the ethanol is catalytically converted into methane, hydrogen, carbon monoxide and carbon dioxide;
a.2) two isothermal reforming microreactors installed in parallel wherein the methane contained in the pre-reformed gas stream obtained in the pre-reforming microreactor is catalytically converted into hydrogen; and
a.3) two catalytic combustion adiabatic microreactors installed in parallel providing the thermal energy required by each of the reforming microreactors.

6. The ethanol processing system according to any of the preceding claims, wherein the refining subunit comprises:
b.1) at least one adiabatic microreactor or GWS microreactor wherein a gas-water shift reaction is carried out in the presence of a catalyst;
b.2) at least one adiabatic microreactor or COPROx microreactor wherein a preferential oxidation reaction is carried out in the presence of a catalyst; and
b.3) an adiabatic methanation microreactor wherein the selective methanation of carbon monoxide is carried out in the presence of a catalyst.

7. The ethanol processing system according to any of the preceding claims, wherein the heat recovery subunit comprises:
- a first micro heat exchanger located at the outlet of the reformer, wherein said first micro heat exchanger allows reducing the temperature of the reformed gas to conditions suitable for being able to be treated in the refining subunit;
- a second micro heat exchanger located at the outlet of the WGS microreactor, wherein said second micro heat exchanger allows reducing the temperature of the process gas to conditions suitable for being able to be treated in the COPROx microreactor;
- a third micro heat exchanger at the outlet of the COPROx microreactor for the purpose of adjusting the temperature of the process gas to that required by the methanation microreactor or by the receiving system downstream of the ethanol processing system;
- a fourth micro heat exchanger vaporizing the process ethanol located in the post-combustion subunit;
- a fifth micro heat exchanger vaporizing the process water located in the cartridge of the post-combustion subunit;
- a micromixer for mixing and superheating the process ethanol and water located in the cartridge of the post-combustion subunit.

8. The ethanol processing system according to any of the preceding claims, wherein:
- the reforming subunit further comprises a micro heat exchanger located at the outlet of the reformer, wherein said first micro heat exchanger allows reducing the temperature of the reformed gas to conditions suitable for being able to be treated in the refining subunit;
- the refining subunit further comprises:
a) a micro heat exchanger located at the outlet of the WGS microreactor which allows reducing the temperature of the process gas to conditions suitable for being able to be treated in the COPROx microreactor;
b) a micro heat exchanger located at the outlet of the COPROx microreactor for the purpose of adjusting the temperature of the process gas to that required by the fuel cell system or by the methanation microreactor;
- the post-combustion subunit further comprises:
c) a micro heat exchanger vaporizing the process ethanol by means of cooling the fumes from the combustion of wastes of the fuel cell system;
d) a micro heat exchanger vaporizing the process water by means of cooling the fumes from the combustion of wastes of the fuel cell system; and
e) a micromixer wherein the process water and ethanol are mixed and superheated as a step prior to the entrance in the pre-reformer.

9. The ethanol processing system according to any of the preceding claims, wherein the refining subunit comprises:
- two adiabatic microreactors or WGS microreactors wherein a gas-water shift reaction is carried out in the presence of a catalyst;
- three adiabatic microreactors or COPROx microreactors wherein a preferential oxidation reaction is carried out in the presence of a catalyst; and
- an adiabatic methanation microreactor wherein the selective methanation of carbon monoxide is carried out in the presence of a catalyst.

10. The ethanol processing system according to claims 7 and 9, wherein the heat recovery subunit further comprises a micro heat exchanger located between the two WGS microreactors and another two micro heat exchangers located between the COPROx microreactors, wherein said micro heat exchangers are inside the refining subunit.

11. An ethanol processing system suitable for its integration in a fuel cell-based air-independent propulsion system, wherein said ethanol processing system comprises:
a) a reforming subunit comprising:
a.1) an adiabatic pre-reforming microreactor or pre-reformer wherein the ethanol is catalytically converted into methane, hydrogen, carbon monoxide and carbon dioxide;
a.2) two isothermal reforming microreactors or reformers installed in parallel wherein the methane contained in the pre-reformed gas stream obtained in the pre-reforming microreactor is catalytically converted into hydrogen;
a.3) two catalytic combustion adiabatic microreactors installed in parallel providing the thermal energy required by each of the reforming microreactors;
a.4) a first micro heat exchanger located at the outlet of the reformers, wherein said first micro heat exchanger allows reducing the temperature of the reformed gas to conditions suitable for being able to be treated in the refining subunit;
b) a purification or refining subunit comprising:
b.1) two adiabatic microreactors or WGS microreactors wherein a gas-water shift reaction is carried out in the presence of a catalyst; and
b.2) three adiabatic microreactors or COPROx microreactors wherein a preferential oxidation reaction is carried out in the presence of a catalyst; and optionally
b.3) an adiabatic methanation microreactor wherein the selective methanation of carbon monoxide is carried out in the presence of a catalyst;
b.4) a second micro heat exchanger located at the outlet of the first WGS microreactor;
b.5) a third micro heat exchanger located at the outlet of the second WGS microreactor which allows reducing the temperature of the process gas to conditions suitable for being able to be treated in the first COPROx microreactor;
b.6) a fourth micro heat exchanger located at the outlet of the first COPROx microreactor;
b.7) a fifth micro heat exchanger located at the outlet of the second COPROx microreactor;
b.8) a sixth micro heat exchanger located at the outlet of the third COPROx microreactor for the purpose of adjusting the temperature of the process gas to that required by the methanation microreactor;
c) a post-combustion subunit comprising:
c.1) an adiabatic microreactor wherein the catalytic combustion of the fumes from the reforming is carried out;
c.2) a seventh micro heat exchanger vaporizing the process ethanol by means of cooling the fumes from the combustion of wastes of the fuel cell system;
c.3) an eighth micro heat exchanger vaporizing the process water by means of cooling the fumes from the combustion of wastes of the fuel cell system; and
c.4) a micromixer wherein the process water and ethanol are mixed and superheated as a step prior to the entrance in the pre-reformer;
d) a starting subunit comprising at least one catalytic combustion adiabatic microreactor wherein ethanol combustion is carried out with oxygen for providing the thermal energy required by the reforming microreactors;
wherein each of the subunits a), b), c) and d) is configured in the form of a compact cartridge.

12. An ethanol reforming method comprising:
- a pre-reforming stage wherein the ethanol is catalytically converted into methane, hydrogen, carbon monoxide and carbon dioxide;
- a subsequent reforming stage wherein the methane contained in the pre-reformed gas stream obtained in the pre-reforming stage is catalytically converted into hydrogen; and
- a refining stage wherein the hydrogen obtained in the reforming stage is purified for reducing the carbon monoxide content to levels acceptable by the anode of a fuel cell,
wherein said stages are carried out using an ethanol reforming system as defined in any of claims 1 to 11.

13. The method according to claim 12, wherein the refining stage comprises:
- a gas-water shift reaction performed in a WGS microreactor wherein part of the carbon monoxide contained in the reformed stream catalytically reacts with the water contained in the same stream forming carbon dioxide and hydrogen;
- a preferential oxidation reaction of carbon monoxide with oxygen performed in a COPROx microreactor; and
- a selective methanation reaction of carbon monoxide.

14. An energy generating system comprising an ethanol processing system suitable for its integration in a fuel cell-based air-independent propulsion system as defined in any of claims 1 to 11.

15. A motor vehicle propelled by an energy generating system, wherein said energy generating system comprises an ethanol processing system suitable for its integration in a fuel cell-based air-independent propulsion system as defined in any of claims 1 to 11.

16. The vehicle according to claim 15, which is a submarine.

## Patentansprüche

1. Ethanolverarbeitungssystem, das zur Integration in ein brennstoffzellenbasiertes luftunabhängiges Antriebssystem geeignet ist, wobei das Ethanolverarbeitungssystem umfasst:
a) eine Reformierungsteileinheit, die umfasst:
a.1) einen adiabatischen Vorreformierungsmikroreaktor oder Vorreformer, in dem das Ethanol in Methan, Wasserstoff, Kohlenmonoxid und Kohlendioxid katalytisch umgewandelt wird;
a.2) mindestens einen isothermen Reformierungsmikroreaktor oder Reformer, in dem das Methan, das im vorreformierten Gasstrom enthalten ist, der im Vorreformierungsmikroreaktor erhalten wird, in Wasserstoff katalytisch umgewandelt wird; und
a.3) mindestens einen adiabatischen Mikroreaktor mit katalytischer Verbrennung, der die vom Reformer benötigte Wärmeenergie bereitstellt;
b) eine Reinigungs- oder Raffinierungsteileinheit, die umfasst:
b.1) mindestens einen adiabatischen Mikroreaktor oder WGS-Mikroreaktor, in dem eine Gas-Wasser-Shiftreaktion in Gegenwart eines Katalysators durchgeführt wird; und
b.2) mindestens einen adiabatischen Mikroreaktor oder COPROx-Mikroreaktor, in dem eine bevorzugte Oxidationsreaktion in Gegenwart eines Katalysators durchgeführt wird; und optional
b.3) einen adiabatischen Methanisierungsmikroreaktor, in dem die selektive Methanisierung von Kohlenmonoxid in Gegenwart eines Katalysators durchgeführt wird;
c) eine Nachverbrennungsteileinheit umfassend einen adiabatischen Mikroreaktor, in dem die katalytische Verbrennung der Dämpfe aus der Reformierung durchgeführt wird;
d) eine Startteileinheit umfassend mindestens einen adiabatischen Mikroreaktor mit katalytischer Verbrennung, in dem Ethanolverbrennung mit Sauerstoff zur Bereitstellung der vom Reformierungsmikroreaktor benötigten Wärmeenergie durchgeführt wird; und
e) eine Wärmerückgewinnungsteileinheit;
wobei jede der Teileinheiten a), b), c) und d) in Form eines kompakten Moduls konfiguriert ist;
und wobei die Wärmerückgewinnungsteileinheit eine Anordnung von Mikrotauschem und Mikromischem umfasst, die in den Teileinheiten a), b) und c) verteilt sind.

2. Ethanolverarbeitungssystem nach Anspruch 1, wobei die unterschiedlichen Mikroreaktoren wie in Anspruch 1 definiert einen platinbasierten Katalysator oder einen Katalysator auf der Grundlage eines Edelmetalls der Platinfamilie umfassen, wobei der Katalysator auf einem anorganischen Oxid getragen wird, das auf einem Metallsubstrat homogen aufgetragen ist.

3. Ethanolverarbeitungssystem nach einem der vorstehenden Ansprüche, wobei die unterschiedlichen Mikroreaktoren wie in Anspruch 1 definiert mit einer Eisen-, Aluminium- und Chromlegierung sowie Edelstahl hergestellt sind.

4. Ethanolverarbeitungssystem nach einem der vorstehenden Ansprüche, wobei das zu reformierende Ethanol Bioethanol ist.

5. Ethanolverarbeitungssystem nach einem der vorstehenden Ansprüche, wobei die Reformierungsteileinheit einen Reformer umfasst, der umfasst:
a.1) einen adiabatischen Vorreformierungsmikroreaktor, in dem das Ethanol in Methan, Wasserstoff, Kohlenmonoxid und Kohlendioxid katalytisch umgewandelt wird;
a.2) zwei parallel installierte isotherme Reformierungsmikroreaktoren, in denen das Methan, das im vorreformierten Gasstrom enthalten ist, der im Vorreformierungsmikroreaktor erhalten wird, in Wasserstoff katalytisch umgewandelt wird; und
a.3) zwei parallel installierte adiabatische Mikroreaktoren mit katalytischer Verbrennung, die die von jedem der Reformierungsmikroreaktoren benötigte Wärmeenergie bereitstellen.

6. Ethanolverarbeitungssystem nach einem der vorstehenden Ansprüche, wobei die Raffinierungsteileinheit umfasst:
b.1) mindestens einen adiabatischen Mikroreaktor oder GWS-Mikroreaktor, in dem eine Gas-Wasser-Shiftreaktion in Gegenwart eines Katalysators durchgeführt wird;
b.2) mindestens einen adiabatischen Mikroreaktor oder COPROx-Mikroreaktor, in dem eine bevorzugte Oxidationsreaktion in Gegenwart eines Katalysators durchgeführt wird; und
b.3) einen adiabatischen Methanisierungsmikroreaktor, in dem die selektive Methanisierung von Kohlenmonoxid in Gegenwart eines Katalysators durchgeführt wird.

7. Ethanolverarbeitungssystem nach einem der vorstehenden Ansprüche, wobei die Wärmerückgewinnungsteileinheit umfasst:
- einen ersten Mikrowärmetauscher, der am Auslass des Reformers liegt, wobei der erste Mikrowärmetauscher eine Reduzierung der Temperatur des reformierten Gases auf Bedingungen ermöglicht, die geeignet sind, eine Behandlung in der Raffinierungsteileinheit durchführen zu können;
- einen zweiten Mikrowärmetauscher, der am Auslass des WGS-Mikroreaktors liegt, wobei der zweite Mikrowärmetauscher eine Reduzierung der Temperatur des Prozessgases auf Bedingungen ermöglicht, die geeignet sind, eine Behandlung im COPROx-Mikroreaktor durchführen zu können;
- einen dritten Mikrowärmetauscher am Auslass des COPROx-Mikroreaktors zwecks Einstellung der Temperatur des Prozessgases auf diejenige, die vom Methanisierungsmikroreaktor oder vom aufnehmenden System stromabwärts vom Ethanolverarbeitungssystem benötigt wird;
- einen vierten Mikrowärmetauscher, der das Prozessethanol vaporisiert, das in der Nachverbrennungsteileinheit vorhanden ist;
- einen fünften Mikrowärmetauscher, der das Prozesswasser vaporisiert, das im Modul der Nachverbrennungsteileinheit vorhanden ist;
- einen Mikromischer zum Mischen und Überhitzen des Prozessethanols und Wassers, die im Modul der Nachverbrennungsteileinheit vorhanden sind.

8. Ethanolverarbeitungssystem nach einem der vorstehenden Ansprüche, wobei
- die Reformierungsteileinheit ferner einen Mikrowärmetauscher umfasst, der am Auslass des Reformers liegt, wobei der erste Mikrowärmetauscher eine Reduzierung der Temperatur des reformierten Gases auf Bedingungen ermöglicht, die geeignet sind, eine Behandlung in der Raffinierungsteileinheit durchführen zu können;
- die Raffinierungsteileinheit ferner umfasst:
a) einen am Auslass des WGS-Mikroreaktors liegenden Mikrowärmetauscher, der eine Reduzierung der Temperatur des Prozessgases auf Bedingungen ermöglicht, die geeignet sind, eine Behandlung im COPROx-Mikroreaktor durchführen zu können;
b) einen am Auslass des COPROx-Mikroreaktors liegenden Mikrowärmetauscher zwecks Einstellung der Temperatur des Prozessgases auf diejenige, die vom Brennstoffzellensystem oder vom Methanisierungsmikroreaktor benötigt wird;
- die Nachverbrennungsteileinheit ferner umfasst:
c) einen Mikrowärmetauscher, der das Prozessethanol 1 mittels Abkühlung der Dämpfe aus der Verbrennung von Abfällen des Brennstoffzellensystems vaporisiert;
d) einen Mikrowärmetauscher, der das Prozesswasser mittels Abkühlung der Dämpfe aus der Verbrennung von Abfällen des Brennstoffzellensystems vaporisiert; und
e) einen Mikromischer, in dem das Prozesswasser und -ethanol als Schritt vor dem Eintritt in den Vorreformer gemischt und überhitzt werden.

9. Ethanolverarbeitungssystem nach einem der vorstehenden Ansprüche, wobei die Raffinierungsteileinheit umfasst:
- zwei adiabatische Mikroreaktoren oder WGS-Mikroreaktoren, in denen eine Gas-Wasser-Shiftreaktion in Gegenwart eines Katalysators durchgeführt wird;
- drei adiabatische Mikroreaktoren oder COPROx-Mikroreaktoren, in denen eine bevorzugte Oxidationsreaktion in Gegenwart eines Katalysators durchgeführt wird; und
- einen adiabatischen Methanisierungsmikroreaktor, in dem die selektive Methanisierung von Kohlenmonoxid in Gegenwart eines Katalysators durchgeführt wird.

10. Ethanolverarbeitungssystem nach Anspruch 7 und 9, wobei die Wärmerückgewinnungsteileinheit ferner einen zwischen den beiden WGS-Mikroreaktoren liegenden Mikrowärmetauscher und weitere zwei zwischen den COPROx-Mikroreaktoren liegende Mikrowärmetauscher umfasst, wobei sich die Mikrowärmetauscher innerhalb der Raffinierungsteileinheit befinden.

11. Ethanolverarbeitungssystem, das zur Integration in ein brennstoffzellenbasiertes luftunabhängiges Antriebssystem geeignet ist, wobei das Ethanolverarbeitungssystem umfasst:
a) eine Reformierungsteileinheit, die umfasst:
a.1) einen adiabatischen Vorreformierungsmikroreaktor oder Vorreformer, in dem das Ethanol in Methan, Wasserstoff, Kohlenmonoxid und Kohlendioxid katalytisch umgewandelt wird;
a.2) zwei parallel installierte isotherme Reformierungsmikroreaktoren oder Reformer, in denen das Methan, das im vorreformierten Gasstrom enthalten ist, der im Vorreformierungsmikroreaktor erhalten wird, in Wasserstoff katalytisch umgewandelt wird;
a.3) zwei parallel installierte adiabatische Mikroreaktoren mit katalytischer Verbrennung, die die von jedem der Reformierungsmikroreaktoren benötigte Wärmeenergie bereitstellen;
a.4) einen ersten Mikrowärmetauscher, der am Auslass der Reformer liegt, wobei der erste Mikrowärmetauscher eine Reduzierung der Temperatur des reformierten Gases auf Bedingungen ermöglicht, die geeignet sind, eine Behandlung in der Raffinierungsteileinheit durchführen zu können;
b) eine Reinigungs- oder Raffinierungsteileinheit, die umfasst:
b.1) zwei adiabatische Mikroreaktoren oder WGS-Mikroreaktoren, in denen eine Gas-Wasser-Shiftreaktion in Gegenwart eines Katalysators durchgeführt wird; und
b.2) drei adiabatische Mikroreaktoren oder COPROx-Mikroreaktoren, in denen eine bevorzugte Oxidationsreaktion in Gegenwart eines Katalysators durchgeführt wird; und optional
b.3) einen adiabatischen Methanisierungsmikroreaktor, in dem die selektive Methanisierung von Kohlenmonoxid in Gegenwart eines Katalysators durchgeführt wird;
b.4) einen am Auslass des ersten WGS-Mikroreaktors liegenden zweiten Mikrowärmetauscher;
b.5) einen am Auslass des zweiten WGS-Mikroreaktors liegenden dritten Mikrowärmetauscher, der eine Reduzierung der Temperatur des Prozessgases auf Bedingungen ermöglicht, die geeignet sind, eine Behandlung im ersten COPROx-Mikroreaktor durchführen zu können;
b.6) einen am Auslass des ersten COPROx-Mikroreaktors liegenden vierten Mikrowärmetauscher;
b.7) einen am Auslass des zweiten COPROx-Mikroreaktors liegenden fünften Mikrowärmetauscher;
b.8) einen am Auslass des dritten COPROx-Mikroreaktors liegenden sechsten Mikrowärmetauscher zwecks Einstellung der Temperatur des Prozessgases auf diejenige, die vom Methanisierungsmikroreaktor benötigt wird;
c) eine Nachverbrennungsteileinheit, die umfasst:
c.1) einen adiabatischen Mikroreaktor, in dem die katalytische Verbrennung der Dämpfe aus der Reformierung durchgeführt wird;
c.2) einen siebenten Mikrowärmetauscher, der das Prozessethanol mittels Abkühlung der Dämpfe aus der Verbrennung von Abfällen des Brennstoffzellensystems vaporisiert;
c.3) einen achten Mikrowärmetauscher, der das Prozesswasser mittels Abkühlung der Dämpfe aus der Verbrennung von Abfällen des Brennstoffzellensystems vaporisiert; und
c.4) einen Mikromischer, in dem das Prozesswasser und -ethanol als Schritt vor dem Eintritt in den Vorreformer gemischt und überhitzt werden;
d) eine Startteileinheit umfassend mindestens einem adiabatischen Mikroreaktor mit katalytischer Verbrennung, in dem Ethanolverbrennung mit Sauerstoff zur Bereitstellung der von den Reformierungsmikroreaktoren benötigten Wärmeenergie durchgeführt wird;
wobei jede der Teileinheiten a), b), c) und d) in Form eines kompakten Moduls konfiguriert ist.

12. Ethanolreformierungsverfahren, das umfasst:
- eine Vorreformierungsstufe, in der das Ethanol in Methan, Wasserstoff, Kohlenmonoxid und Kohlendioxid katalytisch umgewandelt wird;
- eine anschließende Reformierungsstufe, in der das Methan, das im vorreformierten Gasstrom enthalten ist, der in der Vorreformierungsstufe erhalten wird, in Wasserstoff katalytisch umgewandelt wird; und
- eine Raffinierungsstufe, in der der in der Reformierungsstufe erhaltene Wasserstoff zum Reduzieren des Kohlenmonoxidgehalts auf Werte gereinigt wird, die für die Anode einer Brennstoffzelle akzeptabel sind;
wobei die Stufen mit Hilfe eines Ethanolreformierungssystems wie in einem der Ansprüche 1 bis 11 definiert durchgeführt werden.

13. Verfahren nach Anspruch 12, wobei die Raffinierungsstufe umfasst:
- eine Gas-Wasser-Shiftreaktion, die in einem WGS-Mikroreaktor durchgeführt wird, in dem ein Teil des im reformierten Gasstroms enthaltenen Kohlenmonoxids mit dem im selben Strom enthaltenen Wasser katalytisch reagiert, was Kohlendioxid und Wasserstoff bildet;
- eine bevorzugte Oxidationsreaktion von Kohlenmonoxid mit Sauerstoff, die in einem COPROx-Mikroreaktor durchgeführt wird; und
- eine selektive Methanisierungsreaktion von Kohlenmonoxid.

14. Energieerzeugungssystem umfassend einem zur Integration in ein brennstoffzellenbasiertes luftunabhängiges Antriebssystem geeigneten Ethanolverarbeitungssystem wie in einem der Ansprüche 1 bis 11 definiert.

15. Triebfahrzeug, das durch ein Energieerzeugungssystem angetrieben wird, wobei das Energieerzeugungssystem ein zur Integration in ein brennstoffzellenbasiertes luftunabhängiges Antriebssystem geeignetes Ethanolverarbeitungssystem wie in einem der Ansprüche 1 bis 11 definiert umfasst.

16. Fahrzeug nach Anspruch 15, das ein U-Boot ist.

## Revendications

1. Système de transformation de l'éthanol convenant pour être intégré dans un système de propulsion indépendant de l'air à base de pile à combustible, lequel système de traitement de l'éthanol comprend :
a) une sous-unité de reformage comprenant :
a.1) un pré-reformeur ou microréacteur de pré-reformage adiabatique dans lequel l'éthanol est catalytiquement converti en méthane, hydrogène, monoxyde de carbone et dioxyde de carbone ;
a.2) au moins un reformeur ou microréacteur de reformage isotherme dans lequel le méthane contenu dans le courant de gaz pré-reformé obtenu dans le microréacteur de pré-reformage est catalytiquement converti en hydrogène ; et
a.3) au moins un microréacteur adiabatique à combustion catalytique fournissant l'énergie thermique requise par le reformeur ;
b) une sous-unité de purification ou de raffinage comprenant :
b.1) au moins un microréacteur adiabatique ou microréacteur WGS dans lequel une réaction de décalage gaz-eau se déroule en présence d'un catalyseur ; et
b.2) au moins un microréacteur adiabatique ou microréacteur COPROx dans lequel une réaction d'oxydation préférentielle se déroule en présence d'un catalyseur ; et éventuellement
b.3) un microréacteur de méthanation adiabatique dans lequel une méthanation sélective de monoxyde de carbone se déroule en présence d'un catalyseur ;
c) une sous-unité de postcombustion comprenant un microréacteur adiabatique dans lequel se déroule la combustion catalytique des fumées issues du reformage ;
d) une sous-unité de démarrage comprenant au moins un microréacteur adiabatique de combustion catalytique dans lequel la combustion d'éthanol se déroule avec de l'oxygène pour fournir l'énergie thermique requise par le microréacteur de reformage ; et
e) une sous-unité de récupération de chaleur ;
dans lequel chacune des sous-unités a), b), c) et d) est configurée sous la forme d'une cartouche compacte ;
et dans lequel la sous-unité de récupération de chaleur comprend un assemblage de micro-échangeurs et de micro-mélangeurs distribués dans les sous-unités a), b) et c).

2. Système de transformation de l'éthanol selon la revendication 1, dans lequel les différents microréacteurs définis dans la revendication 1 comprennent un catalyseur à base de platine ou un catalyseur à base d'un métal noble de la famille du platine, ledit catalyseur étant supporté sur un oxyde inorganique déposé de façon homogène sur un substrat métallique.

3. Système de transformation de l'éthanol selon l'une quelconque des revendications précédentes, dans lequel les différents microréacteurs définis dans la revendication 1 sont fabriqués avec un alliage de fer, d'aluminium et de chrome et de l'acier inoxydable.

4. Système de transformation de l'éthanol selon l'une quelconque des revendications précédentes, dans lequel l'éthanol devant être reformé est du bioéthanol.

5. Système de transformation de l'éthanol selon l'une quelconque des revendications précédentes, dans lequel la sous-unité de reformage comprend un reformeur comprenant :
a.1) un microréacteur de pré-reformage adiabatique dans lequel l'éthanol est catalytiquement converti en méthane, hydrogène, monoxyde de carbone et dioxyde de carbone ;
a.2) deux microréacteurs de reformage isotherme installés en parallèle, dans lesquels le méthane contenu dans le courant de gaz pré-reformé obtenu dans le microréacteur de pré-reformage est catalytiquement converti en hydrogène ; et
a.3) deux microréacteurs adiabatiques de combustion catalytique installés en parallèle, fournissant l'énergie thermique requise par chacun des microréacteurs de reformage.

6. Système de transformation de l'éthanol selon l'une quelconque des revendications précédentes, dans lequel l'unité de raffinage comprend :
b.1) au moins un microréacteur adiabatique ou microréacteur WGS dans lequel une réaction de décalage gaz-eau se déroule en présence d'un catalyseur ;
b.2) au moins un microréacteur adiabatique ou microréacteur COPROx dans lequel une réaction d'oxydation préférentielle se déroule en présence d'un catalyseur ; et
b.3) un microréacteur de méthanation adiabatique dans lequel une méthanation sélective de monoxyde de carbone se déroule en présence d'un catalyseur.

7. Système de transformation de l'éthanol selon l'une quelconque des revendications précédentes, dans lequel la sous-unité de récupération de chaleur comprend :
- un premier micro-échangeur de chaleur situé à la sortie du reformeur, ledit premier micro-échangeur de chaleur permettant de réduire la température du gaz reformé jusqu'à des conditions convenant pour qu'il puisse être traité dans la sous-unité de raffinage ;
- un deuxième micro-échangeur de chaleur situé à la sortie du microréacteur WGS, ledit deuxième micro-échangeur de chaleur permettant de réduire la température du gaz de procédé jusqu'à des conditions convenant pour qu'il puisse être traité dans le microréacteur COPROx ;
- un troisième micro-échangeur de chaleur situé à la sortie du microréacteur COPROx ayant pour but d'ajuster la température du gaz de procédé à la valeur requise par le microréacteur de méthanation ou par le système récepteur en aval du système de transformation d'éthanol ;
- un quatrième micro-échangeur de chaleur vaporisant l'éthanol de procédé situé dans la sous-unité de postcombustion ;
- un cinquième micro-échangeur de chaleur vaporisant l'eau de procédé située dans la cartouche de la sous-unité de postcombustion ;
- un micro-mélangeur pour mélanger et surchauffer l'eau et l'éthanol de procédé se trouvant dans la cartouche de la sous-unité de postcombustion.

8. Système de transformation de l'éthanol selon l'une quelconque des revendications précédentes, dans lequel :
- la sous-unité de reformage comprend en outre un micro-échangeur de chaleur situé à la sortie du reformeur, ledit premier micro-échangeur de chaleur permettant de réduire la température du gaz reformé jusqu'à des conditions convenant pour qu'il puisse être traité dans la sous-unité de raffinage ;
- la sous-unité de raffinage comprend en outre :
a) un micro-échangeur de chaleur situé à la sortie du microréacteur WGS, qui permet de réduire la température du gaz de procédé jusqu'à des conditions convenant pour qu'il puisse être traité dans le microréacteur COPROx ;
b) un micro-échangeur de chaleur situé à la sortie du microréacteur COPROx ayant pour but d'ajuster la température du gaz de procédé à la valeur requise par le système de pile à combustible ou par le microréacteur de méthanation ;
- la sous-unité de postcombustion comprend en outre :
c) un micro-échangeur de chaleur vaporisant l'éthanol de procédé en refroidissant les fumées provenant de la combustion de déchets du système de pile à combustible ;
d) un micro-échangeur de chaleur vaporisant l'eau de procédé en refroidissant les fumées provenant de la combustion de déchets du système de pile à combustible ; et
e) un micro-mélangeur dans lequel l'éthanol et l'eau de procédé sont mélangés et surchauffés à titre d'étape précédant l'entrée dans le pré-reformeur.

9. Système de transformation de l'éthanol selon l'une quelconque des revendications précédentes, dans lequel la sous-unité de raffinage comprend :
- deux microréacteurs adiabatiques ou microréacteurs WGS dans lesquels une réaction de décalage gaz-eau se déroule en présence d'un catalyseur ;
- trois microréacteurs adiabatiques ou microréacteurs COPROx dans lesquels une réaction d'oxydation préférentielle se déroule en présence d'un catalyseur ; et
- un microréacteur de méthanation adiabatique dans lequel une méthanation sélective de monoxyde de carbone se déroule en présence d'un catalyseur.

10. Système de transformation de l'éthanol selon les revendications 7 et 9, dans lequel la sous-unité de récupération de chaleur comprend en outre un micro-échangeur de chaleur situé entre les deux microréacteurs WGS et deux autres micro-échangeurs de chaleur situés entre les microréacteurs COPROx, lesdits micro-échangeurs de chaleur se trouvant à l'intérieur de la sous-unité de raffinage.

11. Système de transformation de l'éthanol convenant pour être intégré dans un système de propulsion indépendant de l'air à base de pile à combustible, lequel système de traitement de l'éthanol comprend :
a) une sous-unité de reformage comprenant :
a.1) un pré-reformeur ou microréacteur de pré-reformage adiabatique dans lequel l'éthanol est catalytiquement converti en méthane, hydrogène, monoxyde de carbone et dioxyde de carbone ;
a.2) deux reformeurs ou microréacteurs de reformage isotherme en parallèle dans lesquels le méthane contenu dans le courant de gaz pré-reformé obtenu dans le microréacteur de pré-reformage est catalytiquement converti en hydrogène ;
a.3) deux microréacteurs adiabatiques à combustion catalytique installés en parallèle, fournissant l'énergie thermique requise par chacun des microréacteurs de reformage ;
a.4) un premier micro-échangeur de chaleur situé à la sortie des reformeurs, ledit premier micro-échangeur de chaleur permettant de réduire la température du gaz reformé jusqu'à des conditions convenant pour qu'il puisse être traité dans la sous-unité de raffinage ;
b) une sous-unité de purification ou de raffinage comprenant :
b.1) deux microréacteurs adiabatiques ou microréacteurs WGS dans lesquels une réaction de décalage gaz-eau se déroule en présence d'un catalyseur ; et
b.2) trois microréacteurs adiabatiques ou microréacteurs COPROx dans lesquels une réaction d'oxydation préférentielle se déroule en présence d'un catalyseur ; et éventuellement
b.3) un microréacteur de méthanation adiabatique dans lequel une méthanation sélective de monoxyde de carbone se déroule en présence d'un catalyseur ;
b.4) un deuxième micro-échangeur de chaleur situé à la sortie du premier microréacteur WGS ;
b.5) un troisième micro-échangeur de chaleur situé à la sortie du deuxième microréacteur WGS, qui permet de réduire la température du gaz de procédé jusqu'à des conditions convenant pour qu'il puisse être traité dans le premier microréacteur COPROx;
b.6) un quatrième micro-échangeur de chaleur situé à la sortie du premier microréacteur COPROx ;
b.7) un cinquième micro-échangeur de chaleur situé à la sortie du deuxième microréacteur COPROx ;
b.8) un sixième micro-échangeur de chaleur situé à la sortie du troisième microréacteur COPROX ayant pour but d'ajuster la température du gaz de procédé à la valeur requise par le microréacteur de méthanation ;
c) une sous-unité de postcombustion comprenant :
c.1) un microréacteur adiabatique dans lequel se déroule la combustion catalytique des fumées issues du reformage ;
c.2) un septième micro-échangeur de chaleur vaporisant l'éthanol de procédé en refroidissant les fumées provenant de la combustion de déchets du système de pile à combustible ;
c.3) un huitième micro-échangeur de chaleur vaporisant l'eau de procédé en refroidissant les fumées provenant de la combustion de déchets du système de pile à combustible ; et
c.4) un micro-mélangeur dans lequel l'éthanol et l'eau de procédé sont mélangés et surchauffés à titre d'étape précédant l'entrée dans le pré-reformeur ;
d) une sous-unité de démarrage comprenant au moins un microréacteur adiabatique de combustion catalytique dans lequel la combustion d'éthanol se déroule avec de l'oxygène pour fournir l'énergie thermique requise par les microréacteurs de reformage ; dans lequel chacune des sous-unités a), b), c) et d) est configurée sous la forme d'une cartouche compacte.

12. Procédé de reformage d'éthanol comprenant :
- une étape de pré-reformage dans laquelle l'éthanol est catalytiquement converti en méthane, hydrogène, monoxyde de carbone et dioxyde de carbone ;
- une étape de reformage subséquente dans laquelle le méthane contenu dans le courant de gaz pré-reformé obtenu dans l'étape de pré-reformage est catalytiquement converti en hydrogène ; et
- une étape de raffinage dans laquelle l'hydrogène obtenu dans l'étape de reformage est purifié pour que la teneur en monoxyde de carbone soit réduite à des niveaux acceptables par l'anode d'une pile à combustible,
dans lequel lesdites étapes sont effectuées par utilisation d'un système de reformage d'éthanol tel que défini dans l'une quelconque des revendications 1 à 11.

13. Procédé selon la revendication 12, dans lequel l'étape de raffinage comprend :
- une réaction de décalage gaz-eau se déroulant dans un microréacteur WGS dans lequel une partie du monoxyde de carbone contenu dans le courant reformé réagit catalytiquement avec l'eau contenue dans le même courant en formant du dioxyde de carbone et de l'hydrogène ;
- une réaction d'oxydation préférentielle de monoxyde de carbone avec de l'oxygène se déroulant dans un microréacteur COPROx ; et
- une réaction de méthanation sélective de monoxyde de carbone.

14. Système générateur d'énergie comprenant un système de transformation d'éthanol convenant pour être intégré dans un système de propulsion indépendant de l'air à base de pile à combustible tel que défini dans l'une quelconque des revendications 1 à 11.

15. Véhicule à moteur propulsé par un système générateur d'énergie, dans lequel ledit système générateur d'énergie comprend un système de transformation d'éthanol convenant pour être intégré dans un système de propulsion indépendant de l'air à base de pile à combustible tel que défini dans l'une quelconque des revendications 1 à 11.

16. Véhicule selon la revendication 15, qui est un sous-marin.
